## Europäisches Patentamt
## European Patent Office
## Office européen des brevets

(19)

(11) Veröffentlichungsnummer: **0 407 538 B1**

(12) **EUROPÄISCHE PATENTSCHRIFT**

(45) Veröffentlichungstag der Patentschrift: **07.09.94**

(51) Int. Cl.5: **B60S 1/48**, B60J 7/057

(21) Anmeldenummer: **90901744.4**

(22) Anmeldetag: **23.01.90**

(86) Internationale Anmeldenummer:
**PCT/DE90/00037**

(87) Internationale Veröffentlichungsnummer:
**WO 90/08680 (09.08.90 90/19)**

(54) **EINRICHTUNG FÜR DIE STEUERUNG EINES ANTRIEBSMITTELS FÜR EIN FAHRZEUGZUBEHÖR.**

(30) Priorität: **26.01.89 DE 3902231**
**14.09.89 DE 3930732**

(43) Veröffentlichungstag der Anmeldung:
**16.01.91 Patentblatt 91/03**

(45) Bekanntmachung des Hinweises auf die
Patenterteilung:
**07.09.94 Patentblatt 94/36**

(84) Benannte Vertragsstaaten:
**DE ES FR GB IT SE**

(56) Entgegenhaltungen:
**EP-A- 0 136 984**
**WO-A-89/00119**
**DE-A- 3 521 739**
**DE-A- 3 542 032**

**PATENT ABSTRACTS OF JAPAN, Band 7, Nr
24 (M-189)(1169), 29. Januar 1983, & JP-A-
57178929 (FUJI JUKOGYO K.K.) 4. November
1982**

(73) Patentinhaber: **ETABLISSEMENT VORALP**
**Zollstrasse 87**
**FL-9494 Schaan (LI)**

(72) Erfinder: **DRÖGE, Bernhard**
**Lindenstrasse 15**
**D-6451 Neuberg 2 (DE)**

(74) Vertreter: **Schickedanz, Willi, Dipl.-Ing.**
**Langener Strasse 68**
**D-63073 Offenbach (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft eine Einrichtung für die Steuerung eines Antriebsmittels für ein Fahrzeugzubehör mit den Merkmalen des Oberbegriffs des Patentanspruchs 1. Eine derartige Einrichtung ist bekannt aus WO-A- 89/00119 (PCT/DE 88/00374).

Ein wirkungsvolles Scheibenwischersystem ist sowohl für die Sicherheit eines Fahrzeugs als auch der Fahrzeuginsassen sehr wichtig. Bei modernen Scheibenwischersystemen ist eine Vielzahl von Geschwindigkeitsstufen vorgesehen, die es dem Fahrer ermöglichen, die Wischfrequenz den Witterungsbedingungen anzupassen. Ein üblicher Schalter oder Handhebel an der Lenkradsäule eines Kraftfahrzeugs hat beispielsweise vier Stellungen. Die Aus-Stellung setzt den Antriebsmotor außer Betrieb und unterbricht die Tätigkeit der Scheibenwischer. Hohe und niedrige Wischgeschwindigkeit sind für heftigen bis leichten Regen- oder Schneefall vorgesehen. Zusätzlich sind viele Fahrzeuge mit einer Intervall-Schaltung ausgestattet, mit der die Wischertätigkeit eingestellt werden kann. Bei verschiedenen Intervallzyklen kann die Wischergeschwindigkeit so eingestellt werden, daß zwischen den Hin- und Herbewegungen der Scheibenwischer 1 bis 10 Sekunden Pause liegt. Die Intervallschaltung ermöglicht es dem Fahrer, eine ausgewählte Scheibenwischergeschwindigkeit einzustellen, je nachdem wie stark er die Sichtbeeinträchtigung durch die niedergeschlagene Feuchtigkeit empfindet.

Bei allen Möglichkeiten der oben erwähnten Wischersysteme ist die Hin- und Herbewegungsgeschwindigkeit der Scheibenwischer konstant. Auf jede Hin- und Herbewegung folgt eine bestimmte Pause, die solange gleichbleibt, bis der Fahrer eine andere Schalterstellung herbeiführt.

Es ist jedoch in den meisten Fällen schwierig, ohne häufiges Neueinstellen eine Schalterstellung zu finden, bei der die Scheibe frei von Feuchtigkeit bleibt. Die Stärke des Regen- oder Schneefalls kann sich zum Beispiel schnell ändern. Darüber hinaus kann bei einem Überholmanöver Wasser von der Straße auf die Scheibe spritzen und den Fahrer plötzlich an der Sicht durch die Scheibe hindern. Es erfordert häufig eine beträchtliche Reaktionszeit, um die geeignete Geschwindigkeitseinstellung vorzunehmen, so daß die Scheibe wieder frei von Feuchtigkeit ist.

Um den Fahrer von diesen Einstellarbeiten zu entlasten, sind bereits zahlreiche Verfahren zur automatischen Betätigung von Scheibenwischer-Motoren bei Fahrzeugen bekannt, bei denen die Frontscheibenfeuchtigkeit optisch, elektrisch oder akustisch gemessen wird (DE-Offenlegungsschriften 18 08 521, 23 04 302, 23 45 546, 32 03 091, 35 15 409, 33 14 770, DE-PS 31 44 546, EP-A-0 177 419, US-PS 4 554 493, US-PS 4 665 351, US-PS 4 703 237, US-PS 4 495 452, US-PS 4 317 073, AU-A-59 164/86, GB-A-1 596 050, JP 182567/86, JP 184448-9/86, JP 206255/86, JP 126340/87, JP 129749/87, JP 193954/86, JP 170638/86). Nachteilig ist indessen bei den meisten bekannten Verfahren, daß der Scheibenwischer nicht immer dann betätigt wird, wenn es erforderlich ist.

Weiterhin ist aus WO-A- 89/00119 die eingangs genannte Vorrichtung zum regenabhängigen Ein- und Ausschalten eines elektrischen Scheibenwischermotors in Fahrzeugen mit einem auf Nässe auf der Windschutzscheibe des Fahrzeugs ansprechenden Sensor bekannt, der ein Sensorsignal mit von der Feuchte abhängiger Amplitude erzeugt. Ein Einschaltsignal wird hierbei nur dann erzeugt, wenn oberhalb einer vorgegebenen Amplitudengröße des Sensorsignals eine zeitliche Amplitudenzunahme im Sensorsignal vorliegt. Nachteilig ist bei dieser bekannten Vorrichtung, daß sie bereits bei kleinsten Feuchtigkeitsänderungen auf der Scheibe eine erneute Auslösung des Scheibenwischermotors bewirkt, obwohl eine solche Auslösung nicht erforderlich wäre. Dieser Nachteil ist dadurch bedingt, daß zwar die Änderung des Sensorsignals und die Tendenz der Änderung festgestellt wird, nicht jedoch der Betrag der Änderung.

Außerdem bleibt die Amplitude des Sensorsignals bei dieser Vorrichtung auch dann konstant, wenn die Wischerblätter den Sensor bei ihrer Rückkehr in die Ausgangslage letztmalig überstrichen haben und anschließend ein überholendes Kraftfahrzeug durch eine Pfütze fährt und einen kräftigen Wasserspritzer auf den Sensor verursacht. Dies stellt einen Nachteil dar, weil trotz der benetzten Scheibe kein neuer Startimpuls für den Scheibenwischermotor abgegeben wird.

Ein weiterer Nachteil der bekannten Vorrichtung kann dann, wenn keine besonderen Maßnahmen getroffen werden, darin bestehen, daß der Scheibenwischer mitten auf der Scheibe stehenbleibt. Hat nämlich ein Wischerblatt den Sensor auf dem Rückweg getrocknet und befindet er sich nach dem Trocknungsvorgang in Richtung auf seine Ausgangsstellung, so bewirkt das Trocknen des Sensors zunächst eine Zunahme des Widerstands und damit eine Abnahme der Amplitude des Sensorsignals. Die eine Bedingung für die Abgabe eines Einschaltbefehls, daß die Amplitude des Sensorsignals zunimmt, ist somit kurzzeitig nicht erfüllt. Sie wird jedoch sofort wieder erfüllt, wenn es z. B. sehr stark regnet, weil dann die Feuchtigkeit auf dem Sensor sehr schnell zunimmt. Beim Auftreffen einer großen Wassermenge nach der Trocknung des Sensors erhält somit der Scheibenwischer einen neuen Wischimpuls, so daß er dann, wenn das Sensorsignal das einzige Ansteuerkriterium für den Scheibenwischermotor bildet, nicht mehr in seine Ausgangsstellung zurückgelangt und zum Sensor und darüber hinaus zurückkehrt, ohne zuvor in seine Ausgangslage zurückgekommen zu sein, oder dann, wenn auch die Endstellung des Scheibenwischers als Steuerkriterium für den Scheibenwischermotor verwendet wird und der Scheibenwischer also aufgrund einer besonderen Schaltung in seine Ausgangsstellung zurückkehrt, er an dieser Ausgangsstellung keinen erneuten Wischbefehl erhält, weil der zuvor abgegebene Wischbefehl nicht mehr wirksam ist. Beides ist sehr störend, denn einerseits ist der Fahrer daran gewöhnt, daß der Scheibenwischer volle Wischbewegungen bis zur Ausgangslage macht, und andererseits soll auch ein verspätet aufgetretener Spritzer den Wischvorgang einleiten.

Der Erfindung liegt die Aufgabe zugrunde, eine Einrichtung für die Steuerung eines Antriebsmittels für ein Fahrzeugzubehör zu schaffen, welches die vorbeschriebenen Nachteile nicht aufweist.

Diese Aufgabe wird gemäß den Merkmalen des Patentanspruchs 1 gelöst.

Der mit der Erfindung erzielte Vorteil besteht insbesondere darin, daß der oder die Scheibenwischer eines Kraftfahrzeugs nur in ihrer jeweiligen linken oder rechten Endstellung eine Richtungsumkehr erfahren und nicht in einer Zwischenstellung auf der Scheibe, obwohl eine Sensorsteuerung mit Schwellwertcharakter verwendet wird. Der übliche Scheibenwischerrhythmus wird folglich nicht durch die Sensorsteuerung beeinträchtigt. Außerdem erfolgt nur dann eine automatische Auslösung der Scheibenwischersteuerung,wenn es tatsächlich regnet, und nicht schon, wenn sich eine Restfeuchtigkeit auf der Scheibe befindet. Ferner ist die Erfindung besonders geeignet, auch eine automatische Schiebeachsteuerung durchzuführen.

Ausführungsbeispiele der Erfindung sind in der Zeichnung dargestellt und werden im folgenden näher beschrieben. Es zeigen:

Fig. 1    einen Personenkraftwagen mit einer Frontscheibe, an der ein Feuchtigkeitssensor angebracht ist;

Fig. 2    eine genauere Darstellung des in einer Frontscheibe eingebrachten Sensors;

Fig. 3    eine Variante des in der Fig. 2 dargestellten Sensors, die für die Erfassung der durch Nebel erzeugten Feuchtigkeit geeignet ist;

Fig. 4    einen Querschnitt durch eine Windschutzscheibe mit einem Sensor gemäß Fig. 2;

Fig. 5    den zeitlichen Verlauf des ohmschen Widerstands des Sensors bei Auftreten von Feuchtigkeit auf der Windschutzscheibe;

Fig. 6    eine schematische Darstellung von Scheibenwischer-Bewegungen auf einer Windschutzscheibe mit Feuchtigkeitssensor;

Fig. 7    eine Prinzipdarstellung einer Steuereinrichtung für einen Scheibenwischermotor;

Fig. 8    eine Schaltungsanordnung einer Auswerteschaltung für ein Feuchtigkeits-Sensorsignal;

Fig. 9    eine Signalverzögerungsschaltung mit astabilem Multivibrator;

Fig. 10    eine Signalverzögerungsschaltung mit rücksetzbarem Flipflop;

Fig. 11    eine Schaltungsanordnung für die Realisierung der Auswerteschaltung gemäß Fig. 8;

Fig. 12    eine Schaltungsanordnung mit einer Vielzahl von Schwellwertschaltern für für die Auswertung des Verlaufs von ohmschen Widerstandswerten in Abhängigkeit von der Feuchtigkeit;

Fig. 13    eine Schaltungsanordnung für die Realisierung des Waschvorgangs;

Fig. 14    eine Schaltungsanordnung für die Steuerung eines Hebe-Schiebe-Daches eines Kraftfahrzeugs.

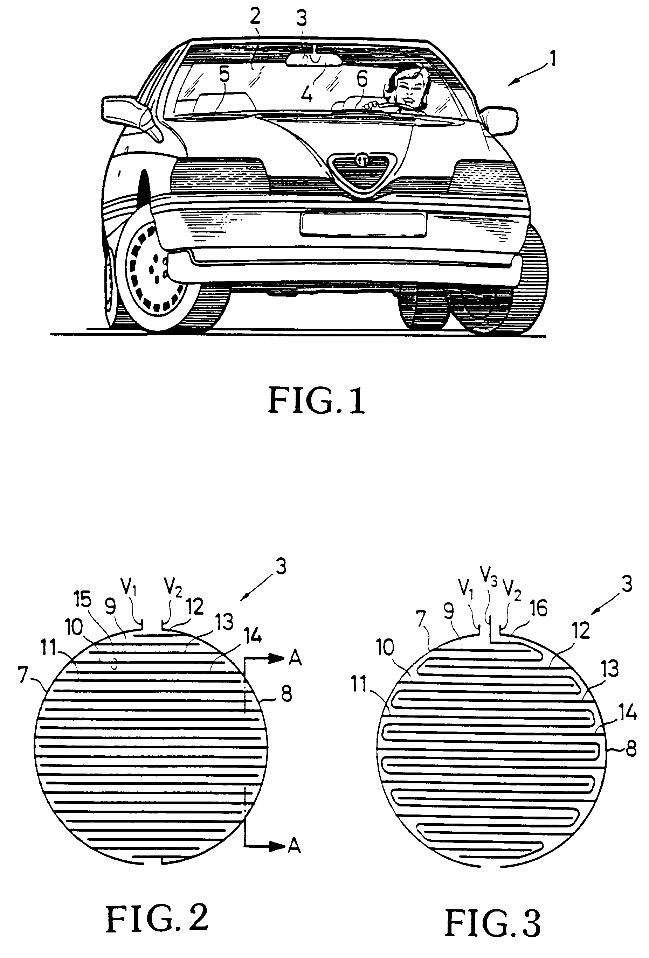

In der Fig. 1 ist ein Personenkraftwagen 1 dargestellt, der eine Windschutzscheibe 2 aufweist, die mit einem Feuchtigkeitssensor 3 versehen ist. Dieser Feuchtigkeitssensor 3 hat eine Größe von etwa sieben cm$^2$ bis achtzig cm$^2$ und ist vorzugsweise so angeordnet, daß er aus der Sicht des Fahrers und gegebenenfalls auch noch aus der Sicht eines Beifahrers durch einen Rückspiegel 4 verdeckt wird, so daß er das Gesichtsfeld nicht stört. An der Unterkante der Windschutzscheibe sind zwei Scheibenwischer 5, 6 erkennbar; statt dieser beiden kleinen Scheibenwischer kann selbstverständlich auch ein großer und zentraler Scheibenwischer vorgesehen sein, der die ganze Scheibe bedient.

Die Fläche des Sensors wird deshalb auf etwa sieben bis achtzig cm$^2$ festgelegt, weil einerseits bei einer kleineren Fläche die Wahrscheinlichkeit gleichen Feuchtigkeitsgrads auf dem Sensor und der übrigen Scheibenfläche nicht sehr groß wäre und weil andererseits bei größerer Fläche die Sicht und damit die Fahrsicherheit beeinträchtigt würde.

Von Bedeutung ist auch, daß der Sensor 3 im oberen Drittel des Wischfelds anzubringen ist, da je nach Witterung und Fahrtwindströmungen die beiden unteren Drittel der Scheibe 2 deutlich weniger benetzt werden als das obere Drittel. Würde der Sensor 3 in einem der beiden unteren Drittel angebracht, so könnte dies ein zu spätes Erkennen der die Sicht behindernden Feuchtigkeit nach sich ziehen.

Auch im Winter, wenn sich die Windschutzscheibe 2 mit Reif oder Eis überzieht, ist die Anordnung des Sensors 3 im oberen Drittel vorteilhaft, denn eine Reif- oder Eisschicht wird nicht als Feuchtigkeit erkannt. Taut die Eisschicht auf - bei dünnen Eisschichten wird erfahrungsgemäß häufig das Eis nicht abgeschabt, sondern mittels der Heizung entfernt -, so schmilzt das Eis von unten nach oben, d. h. unten wird es eher feucht als oben. Dies hätte bei einem unten angebrachten Sensor 3 zur Folge, daß er bereits Feuchtigkeit registriert, während oben noch Eis vorhanden ist. Die Wischer 5, 6 würden also bereits in Gang gesetzt, obwohl das obere Drittel der Scheibe 2 noch vereist ist.

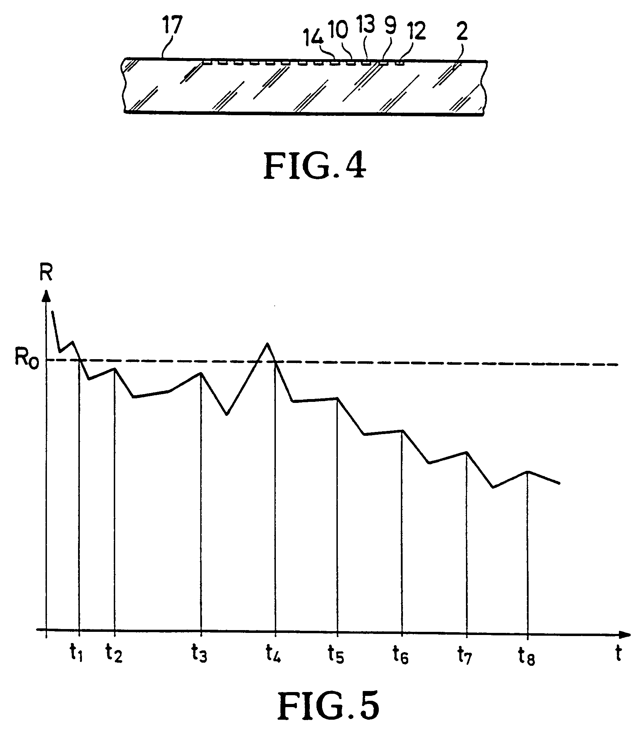

Die Fig. 2 zeigt den mechanischen Aufbau des Feuchtigkeitssensors 3 im einzelnen. Man erkennt hierbei eine erste Leiterbahnanordnung 7, die einer zweiten Leiterbahnanordnung 8 gegenüberliegt. Beide Leiterbahnanordnungen 7, 8 haben abzweigende Stege 9, 10, 11 bzw. 12, 13, 14, die kammartig ineinandergreifen. Während die erste Leiterbahnanordnung 7 an einem ersten elektrischen Potential $V_1$ liegt, ist die zweite Leiterbahnanordnung 8 an ein zweites elektrisches Potential $V_2$ angeschlossen. Die Leiterbahnanordnungen 7, 8 bestehen z. B. aus Silber und sind an ihren Enden an Gleichstrompotentiale $V_1$, $V_2$ angeschlossen, d. h. es wird ihr ohmscher Widerstand überwacht. Die gesamte aus den Leiterbahnanordnungen 7 und 8 bestehende Anordnung ist in die Windschutzscheibe 2 eingebettet, und zwar so, wie es in der nachfolgenden Fig. 4 näher dargestellt ist. Werden zwei zu verschiedenen Leiterbahnanordnungen 7, 8 gehörende Stege, z. B. 10 und 14, durch einen Wassertropfen 15 überbrückt, so verändert sich der elektrische Gesamtwiderstand, der durch die beiden Leiterbahnanordnungen 7, 8 gebildet wird. In der Praxis ist es nun keineswegs so, daß die Überbrückung zweier Stege durch einen Wassertropfen 15 zu einem Kurzschluß führt und der ohmsche Gesamtwiderstand der Leiterbahnanordnungen 7, 8 von Unendlich schlagartig auf Null zurückgeht. Vielmehr ist der Widerstand schon vor der Benetzung mit Feuchtigkeit nicht Unendlich, sondern im Zehn-MOhm-Bereich, was durch nie ganz zu vermeidende Verunreinigungen und dadurch bedingt ist, daß der Widerstand auch eines guten Isolators zwischen zwei Stegen nicht Unendlich ist. Überbrückt ein Tropfen zwei dieser Stege, so hängt dieWiderstandssenkung stark von der Art des Tropfens ab. Sogenannter "saurer Regen", der ein Elektrolyt ist, bewirkt selbstverständlich eine weitaus höhere Widerstandsabsenkung als destilliertes Wasser. Durch die Überbrückung zweier Stege wird deshalb der Gesamtwiderstand des in der Fig. 2 gezeigten Sensors 3 vom Zehn-MOhm-Bereich in den Hundert-KOhm-Bereich gelangen. Je mehr Stege durch weitere Regentropfen überbrückt werden, um so stärker fällt der ohmsche Widerstand ab. da die miteinander durch Wassertropfen verbundenen Paare von Stegen parallelgeschaltet sind. Wie bei einer herkömmlichen Schaltungsanordnung mit parallelgeschalteten ohmschen Widerständen sinkt folglich der Gesamtwiderstand mit jedem zugeschalteten Parallelwiderstand.

So wie einerseits der ohmsche Widerstand nach Auftreffen von Regentropfen nicht Schlagartig von Unendlich auf Null absinkt, steigt er andererseits nach einem Wischvorgang auch nicht schlagartig von Null auf Unendlich an. Schmutz und Restfeuchte bleiben auch bei den besten Wischerblättern und bei der glattesten Scheibenoberfläche noch für eine gewisse Zeit nach einem Wischvorgang erhalten.

Die Grenze zwischen "feucht" und "trocken" wird folglich durch einen zu definierenden Schwellwert des ohmschen Widerstands festzulegen sein. Nur dann, wenn der Widerstand unter diesen Schwellwert fällt, wird der Wischer betätigt.

In der Fig. 3 ist eine Variante der Anordnung nach Fig. 2 gezeigt, bei der zwischen den beiden Leiterbahnanordnungen 7, 8 eine dritte Leiterbahn 16 eingefügt ist, die an einem Potential $V_3$ liegt. Diese zweite Variante ist insbesondere für die Erfassung der Feuchtigkeit geeignet, die durch Nebel bedingt ist. Nebel unterscheidet sich von Regen dadurch, daß er aus einer Vielzähl von sehr kleinen Wassertröpfchen besteht, die sich selbst bei großer Tröpfchendichte noch nicht berühren und demzufolge weit auseinanderliegende Leiter nicht überbrücken können. Durch Hinzufügen einer dritten Leiterbahn 16 wird der Abstand zwischen zwei Leiterbahnanordnungen 7, 16 bzw. 8, 16 verringert, so daß durch Auswertung der an $V_1/V_3$ bzw. $V_3/V_2$ und/oder $V_1/V_2$ meßbaren Widerstände ermittelt werden kann, ob Nebel vorliegt oder nicht. Die dritte Leiterbahn 16 kann folglich dazu dienen, einen Durchschnittswert für die Amplitudengröße festzulegen, um feststellen zu können, ob es sich um Nebel oder sauberen Regen einerseits oder um normalen und verschmutzten Regen andererseits handelt. Die elektrische Leitfähigkeit des verschmutzten Normalregens ist wesentlich höher als die Leitfähigkeit von Nebel oder sauberem Regen.

Es ist auch möglich, neben $R_0$ einen Nebel-Widerstands-Schwellwert $R_{Nebel}$ einzuführen, so daß dann, wenn der Widerstand länger als eine vorgegebene Zeit zwischen $R_0$ und $R_{Nebel}$ liegt, einWischvorgang ausgelöst werden kann. Ein Widerstandswert zwischen $R_0$ und $R_{Nebel}$ wird zwar auch dann erreicht, wenn kein Nebel vorliegt, doch tritt er nicht für eine bestimmte Zeit auf oder aber bei starkem Regen, für den die bisher beschriebene Schaltung ausreicht. Die Nebel-Schaltung könnte für diesen Fall als ODER-Schaltung vorgesehen sein. Eine Zeitvorgabe für $R_{Nebel}$ ist statthaft, da bei Nebel eineWischfrequenz oberhalb dieser Zeit nicht benutzt wird. Beim Übergang von Nebel zu Regen oder dergleichen wird dieWischerauslösung von der bereits beschriebenen Anordnung übernommen. Eine derartige Nebelauswertung läßt sich auch ohne dritte Schleife im Sensor realisieren, und zwar alleine mittels elektronischer Einrichtungen.

Die Fig. 4 stellt einen Schnitt A-A durch die Anordnung gemäß Fig. 2 dar. Wie sich hieraus ergibt, sind die Stege der einzelnen Leiterbahnanordnungen 7, 8 dicht unterhalb der Oberfläche 17 der Windschutzscheibe 2 angeordnet, und zwar so, daß ihre nach außen gerichteten Oberflächen exakt mit der nach außen gerichteten Oberfläche 17 der Scheibe 2 fluchten. Hierdurch wird gewährleistet, daß sich kein Schmutz und keine Feuchtigkeit in Rillen setzen können, die die Widerstandswerte erheblich beeinflussen. Durch eine präzise Einarbeitung der Leiter in die Windschutzscheibe 2 ist es also möglich, die Widerstandsänderungen des Sensors eindeutig auf den auftreffenden Regen zurückzuführen und nicht auf eventuelle Nebeneffekte.

Bei bekannten Feuchtigkeitssensoren wurden die Leiterbahnen des Sensors oft auf der Außenseite der Windschutzscheibe angebracht, so daß sie im Vergleich zur Oberfläche dieser Scheibe - wenn auch geringfügig, also im $\mu$-Bereich - hervorstanden. Hierdurch treten bereits erhebliche Verfälschungen bei der Bestimmung des Widerstands auf. Zugelassen werden kann dagegen eine leichte Negativform der Leiterbahnen gegenüber der Scheibenoberfläche. Liegen die Leiterbahnen jedoch zu tief unterhalb der Glasisolierung der Scheibe, so entstehen beim Wischvorgang Abrißtropfen, und es tritt eine unerwünschte Widerstands-Verfälschung auf.

In der Fig. 5 ist dargestellt, wie sich der ohmsche Gesamtwiderstand der Anordnung nach Fig. 2 verhält, wenn Regen auf die Windschutzscheibe 2 Fällt. Bei zunächst trockener Scheibe 2 hat der ohmsche Widerstand R im Bereich $t < t_1$ einen sehr hohen Wert und fällt dann durch das Auftreffen von Regentropfen allmählich ab, um z. B. dann, wenn Regentropfen durch den Fahrtwind weggeblasen werden, wieder anzusteigen. Dies ist durch die aufsteigende Gerade zwischen $t = 0$ und $t_1$ angedeutet. Hält der Regen an, so wird der Widerstand R in jedem Fall soweit absinken, bis er an einen Grenzwert $R_0$ gelangt. Dieser Grenzwert wird im vorliegenden Beispiel zum Zeitpunkt $t_1$ erreicht. Mittels einer Schwellwert-Erkennungsschaltung, die nachfolgend noch beschrieben wird, kann dieser Schwellwert erkannt werden, worauf der Scheibenwischer 5, 6 einen Befehl erhält, mit dem Wischen zu beginnen. Am Anfang des Wischvorgangs befinden sich die Scheibenwischer in ihrer Ausgangsstellung, so daß der Wischbefehl automatisch ein Ausgangsstellungs-Befehl ist. Diese Situation trifft auf die darauffolgenden Wischvorgänge nicht mehr zu, weil die Feuchtigkeitsschwelle praktisch bei allen Scheibenwischerstellungen überschritten werden kann. Hat der Scheibenwischer 5, 6, von seiner Ausgangsstellung kommend, den Sensor überstrichen, so wird dieser trocken oder nahezu trocken, was zu einem Anstieg des Widerstandswerts führt. Dies wird durch die wieder ansteigende Kurve im Bereich zwischen $t_1$ und $t_2$ angedeutet. Zum Zeitpunkt $t_2$ gelangt jedoch erneut Feuchtigkeit auf die Scheibe, was zu einem Absinken des Widerstands führt. Im Rücklauf zu seiner Ausgangsstellung wischt nun der Scheibenwischer wieder über den Sensor, so daß zwischen $t_2$ und $t_3$ ein Ansteigen des Widerstandswerts zu beobachten ist. Nimmt man nun an, daß es nicht mehr stark weiterregnet, dann bewirkt der nächste Wischvorgang des Scheibenwischers, daß der Widerstandswert weiterhin zunimmt und bis auf einen Wert gelangt, der zum Zeitpunkt $t_3$ aus der $R = f(t)$-Kurve ablesbar ist.

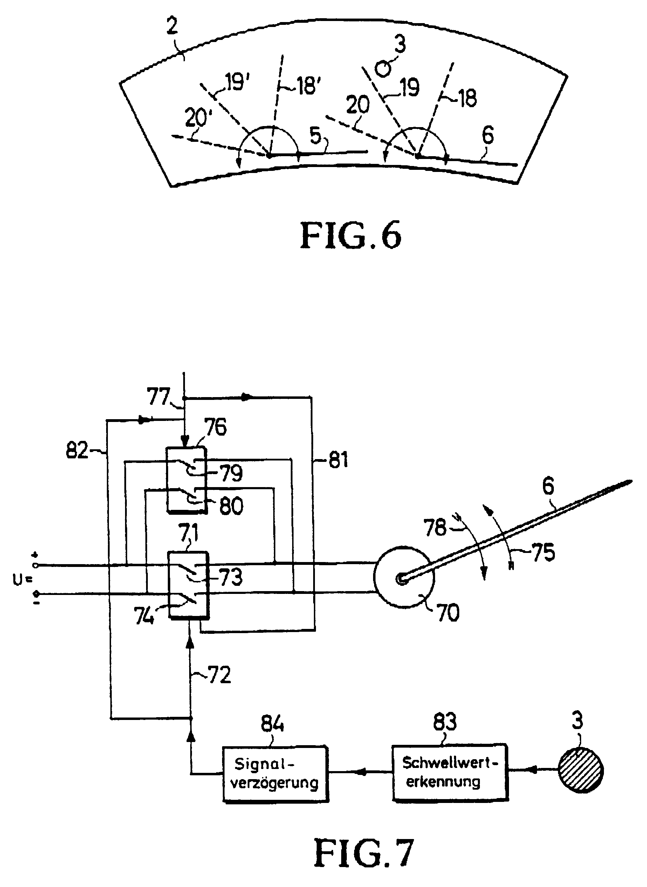

Anhand der Fig. 6 wird der vorstehend beschriebene Sachverhalt noch einmal näher erläutert. Geht man davon aus, daß der Sensor 3 aufgrund eines plötzlich auftretenden Regens so stark benetzt wird, daß der ohmsche Widerstand den Grenz- oder Schwellwert $R_0$ unterschreitet, so wird aufgrund der erkannten Schwellwertunterschreitung ein Startsignal an einen Scheibenwischermotor gegeben, worauf sich die bislang in ihrer Ausgangsstellung befindlichen Scheibenwischer 5, 6 in Bewegung setzen und nacheinander die Zwischenstellungen 18 bzw. 18', 19 bzw. 19' und die zweite Endstellung 20 bzw. 20' einnehmen. Von dieser zweiten Endstellung kehren sie wieder in ihre Ausgangsstellung zurück. Hat der Scheibenwischer 6 bei seinem Weg von der Ausgangsstellung die Position 19 eingenommen, so ist der Sensor 3 trocken gewischt oder doch fast trocken, d h. der vorher gefallene ohmsche Widerstand steigt wieder an, um - sofern der Regen anhält - bis zur Endstellung 20 des Scheibenwischers 6 wieder abzufallen. Das Trocknen des Sensors 3 durch den Scheibenwischer ist nicht notwendigerweise derart, daß stets wieder die Schwelle $R_0$ nach oben hin überschritten wird, wie dies etwa kurz vor $t_4$ in Fig. 5 angedeutet ist. Vielmehr kann der Schwellwert während des ganzen Regens unterhalb von $R_0$ liegen. In diesem Fall steht fortwährend ein Einschaltsignal für den Scheibenwischer an, das jedoch nur dann aktiviert wird, wenn der Scheibenwischer seine Ausgangslage erreicht hat. Erhält er in der Ausgangslage einen Steuerimpuls, so wird er für eine vollständige Hin- und Herbewegung aktiviert. Die Trocknung des Sensors 3, die eigentlich ein Abschaltsignal bewirkt, bleibt während einer Wischphase im Hinblick auf das Ein- und Ausschalten des Wischermotors unberücksichtigt. Würde sie berücksichtigt, so bedeutete dies, daß bei jedem Wischvorgang der Schwellwert $R_0$ wenigstens kurzzeitig überschritten werden könnte und daß während des Zeitraums, in dem der Scheibenwischer 6 z. B. von der Position 18 in die Position 19 gelangt, ein Haltebefehl für den Wischermotor abgegeben würde. Anders ausgedrückt: Das Trocknen oder Quasi-Trocknen des Sensors 3 würde bei einer Impulssteuerung des Scheibenwischermotors ein Abschalten des Motors etwa in der Stellung 19 bewirken. In dieser Stellung 19 bliebe der Scheibenwischer 6 also stehen. Dieses Stehenbleiben würde jedoch nicht lange währen, weil der Sensor 3 im folgenden erneut durch den Regen benetzt würde und folglich einen neuen Einschaltimpuls an den Scheibenwischermotor abgäbe. Der Scheibenwischer 6 würde sich hierauf bis zur Endstellung 20 bewegen, würde dort bezüglich seiner Drehrichtung z. B. mittels einer mechanischen, optischen oder sonstigen Einrichtung zur Endlageerkennung umgekehrt und gelangte erneut zum Sensor 3, der nach der Quasi-Trocknung einen weiteren Haltebefehl an den Scheibenwischermotor abgäbe. Der Scheibenwischer 6 bliebe in diesem Fall etwas rechts vom Sensor 3 stehen, würde aber alsbald nach rechts weiterbewegt, weil der Scheibenwischermotor aufgrund der erneuten Benetzung des Sensors einen Steuerbefehl erhielte.

Nachteilig wäre bei dieser mit Stopimpulsen arbeitenden Scheibenwischersteuerung das kurzzeitige Anhalten des Scheibenwischers kurz vor oder hinter dem Sensor 3. Deshalb wird in der Regel von dem Aktivierungsprinzip Gebrauch gemacht, bei dem der Scheibenwischer, nachdem er einmal einen Start-impuls erhalten hat, einen vollen Vor- und Rücklauf macht. Man könnte allerdings auch das Deaktivierungs- oder Abschaltprinzip anwenden. Hierbei müßte jedoch der Sensor praktisch mit der Endstellung des Scheibenwischers zusammenfallen, weil nur dann ein Abschalten in der Ausgangslage gewährleistet wäre. Dies hätte jedoch die bereits oben beschriebenen Nachteile.

Um den Sensor 3 in den oberen Bereich der Scheibe 2 legen zu können und trotzdem den Scheibenwischer in seine Endstellung zurückzuführen und nur aus dieser Endstellung bei auftretendem Regen zu starten, wird erfindungsgemäß der Startimpuls, der nach einer Trockenlegung des Sensors aufgrund von erneut auftretender Feuchtigkeit abgegeben wird, solange gespeichert, bis der Scheibenwischer seine Ausgangsposition wieder eingenommen hat. Berücksichtigt man den Startimpuls nur auf dem Rückweg des Scheibenwischers von der Stellung 20 über 19 und 18 bis zur Endstellung, so muß ein Startimpuls etwa um diejenige Zeit verzögert werden, die der Scheibenwischer vom Sensor 3 zur Ausgangsstellung benötigt, weil der auslösende Startimpuls in der Regel nach dem Rückwärts-Überstreichen des Sensors 3 ausgelöst wird.

Im Ergebnis werden somit durch die Erfindung die gewohnten Verhältnisse beibehalten, denn auch bei herkömmlichen Scheibenwischern ohne Feuchtigkeitssensor starten die Scheibenwischer meistens von ihrer Ausgangslage aus. Bei dieser konventionellen Scheibenwischersteuerung treten allerdings auch während des eigentlichen Wischvorgangs keine zusätzlichen Signale auf. Bei der vorliegenden Erfindung gibt dagegen der Sensor 3 stets dann ein Steuersignal ab, wenn eine bestimmte Widerstandsschwelle unterschritten wurde, und es muß dann im Einzelfall entschieden werden, was mit diesem zusätzlichen Signal geschehen soll.

Gemäß der Erfindung werden alle Signale des Sensors 3 bezüglich der Motorsteuerung ignoriert, die während des Weges von der Ausgangsstellung über 18, 29, 20 und zurück bis zum Sensor 3 erzeugt werden. Nur diejenigen Signale, die vom Sensor 3 während derjenigen Zeit abgegeben werden, in der sich der Scheibenwischer 6 auf dem Weg vom Sensor 3 in seine Ausgangsstellung befindet, werden im Hinblick auf die Ansteuerung des Scheibenwischermotors ausgewertet.

Eine geringere Speicherzeit als die Zeit, die der Scheibenwischer 6 vom Sensor 3 zu seiner Ausgangsstellung benötigt, ist dann erforderlich, wenn der Widerstandswert erst kurz vor Erreichen der Endlage wieder den Schwellwert unterschreitet, der Feuchtigkeit andeutet. In diesem Fall wird z. B. der Einschaltimpuls in der Position 18 des Scheibenwischers 6 ausgelöst, und die notwendige Impulsspeicherzeit entspricht der Zeit, die der Scheibenwischer 6 von der Position 18 bis zur Endstellung benötigt. Um diese variablen Speicherzeiten zu realisieren, ist es möglich, beim Auftreten eines Einschaltimpulses aus dem Sensor 3 ein Flipflop zu setzen, das bei Erreichen der Endstellung des Scheibenwischers wieder zurückgesetzt wird. Die Setzzeit entspricht dann der Speicherzeit. Für die Rücksetzung des Flipflop ist eine Vorrichtung erforderlich, welche die Endstellung des Scheibenwischers erkennt. Will man ohne eine solche Einrichtung auskommen, kann man den Einschaltimpuls um die Zeit $t_x$ verzögern, die der Zeit entspricht, welche der Scheibenwischer von der Position beim Sensor 3 bis zum Erreichen der Endstellung benötigt. Dieser Impuls kommt zwar dann, wenn der Einschaltimpuls erst in der Position 18 abgegeben wird, verspätet beim Scheibenwischermotor an, doch hat dies lediglich zur Folge, daß der Scheibenwischer für eine gewisse Zeit in der Ruhestellung bleibt, bevor er wieder einen neuen Wischbefehl erhält. Jede neue Schwellwertunterschreitung löst ein erneutes Setzen der Impulsverzögerungseinrichtung aus. Dies hat zur Folge, daß jede mit einer Schwellwertunterschreitung verbundene Feuchtigkeitserkennung, die nach dem Start eines Wischvorgangs bis einschließlich dem erneuten Unterschreiten des Schwellwerts bis zur Berührung des Sensors 3 durch den Scheibenwischer 6 beim Wischerrücklauf bei Erreichen der Ruhelage, nicht mehr gespeichert wird. Wird jedoch nach der Berührung Wischer 6/Sensor 3 eine Schwellwertunterschreitung erkannt, so bleibt der Einschaltimpuls aktiviert.

In der Fig. 7 ist eine Prinzipdarstellung gezeigt, mit welcher die vorbeschriebene Steuerung durchgeführt werden kann. Mit 70 ist ein Scheibenwischermotor bezeichnet, der das Wischerblatt 6 trägt und der über ein Relais 71 an einer Gleichspannung $U_=$ liegt. Wird das Relais 71 über eine Steuerleitung 72 betätigt, so schließen sich die Kontakte 73, 74 und legen den Motor 70 an die Spannung $U_=$. Der Scheibenwischer 6 bewegt sich hierauf in Richtung des Pfeils 75. Mit Hilfe eines zweiten Relais 76, das über eine Steuerleitung 77 aktiviert werden kann, ist es möglich, das Wischerblatt 6 in Richtung des Pfeils 78 zu bewegen. Hierzu wird die Spannung $U_=$ mit umgekehrter Polarität an den Motor 70 gelegt, was dadurch geschieht, daß die Kontakte 79, 80 des Relais 76 geschlossen und die Kontakte 73, 74 des Relais 71 geöffnet werden. Ein Schließimpuls für das Relais 76 kann dabei mit einem Öffnungsimpuls für das Relais 71 gekoppelt sein, was durch die Leitung 81 angedeutet ist. Umgekehrt kann auch ein Schließimpuls für das Relais 71 mit einem Impuls zum Öffnen des Relais 76 gekoppelt sein, was durch die Leitung 82 symbolisiert ist. Der Steuerimpuls für einen erneuten Wischvorgang wird über eine besondere Schaltungsanordnung auf die Leitung 72 gegeben. Diese Schaltungsanordnung besteht aus dem Sensor 3, dem eine Schwellwerterkennung 83 nachgeschaltet ist. Unterschreitet der Widerstand die Schwelle $R_0$, was auf vorhandene Feuchtigkeit auf der Scheibe hindeutet, so gibt die Schwellwerterkennung 83 einen Wischbefehl ab, der jedoch erst wirksam werden soll, wenn sich der Scheibenwischer in seiner Endposition befindet Die verzögerte Wirksamkeit des Wischbefehls wird durch eine Signalverzögerung 84 erreicht, die das Relais 71 in der Endstellung des Scheibenwischers 6 ansteuert. Würde das Relais 71 sofort bei Unterschreiten des Schwellwertes angesteuert, d. h. wäre die Signalverzögerung nicht vorhanden, so könnte es vorkommen, daß das Relais 71 auf dem Hinweg des Scheibenwischers 6, wenn dieser z. B. die Stellung 20 in Fig. 6 eingenommen hat, einen Ansteuerimpuls erhielte. Da das Relais 71 zu diesem Zeitpunkt ohnehin geschlossen ist, wäre der Steuerimpuls wirkungslos. Diese Wirkungslosigkeit würde allerdings nichts schaden, weil der Scheibenwischer auf seinem Rückweg ohnehin noch einmal den Sensor 3 trocknet Problematisch wird es allerdings, wenn nach dem Trocknen des Sensors 3 auf dem Rückweg ein kräftiger Wasserspritzer oder dergleichen auf den Sensor gelangt. In diesem Fall wird ebenfalls ein Steuerimpuls abgegeben, wenn das Relais 76 noch geschlossen ist und das offene Relais 71 nicht geschlossen werden soll, weil der Scheibenwischer zuerst in seine Ausgangslage zurück soll. Das Steuersignal für den Scheibenwischer 6 wird folglich zu einem Zeitpunkt abgegeben, in dem sich der Scheibenwischer 6 noch auf dem Rückweg befindet und zu dem es an sich wirkungslos bleiben soll. Zu demjenigen Zeitpunkt jedoch, zu dem es wirken soll, also in der Endposition des Scheibenwischers, liegt der Impuls nicht mehr vor. Um diesen Nachteil zu vermeiden, wird der Steuerimpuls für das Relais 71 in einer Signalverzögerung 84 gespeichert und erst dann aktiviert, wenn der Scheibenwischer seine Endlage eingenommen hat.

Selbst wenn man annimmt, daß die Schwellwerterkennung 83 keine Impulse, sondern Dauersignale abgibt, solange der Schwellwert unterschritten wird, ändert sich im Ergebnis nichts, weil auch dieses Dauersignal das Relais 71 vorzeitig, d. h. wenn der Scheibenwischer seine Endstellung erreicht hat, schließen würde. Es würde folglich nichts nützen, wenn das Dauersignal, im Gegensatz zu einem impulsförmigen Signal, auch noch in der Endlage des Scheibenwischers 6 anstehen würde. Auch ein Dauersignal müßte somit erst aktiviert werden, wenn der Scheibenwischer seine Endlage erreicht hat. Diese verzögerte Aktivierung ist aber ebenfalls eine Verzögerung im Sinne der vorliegenden Erfindung.

Bisher wurde nur der Schwellwert $R_0$ des Sensors 3 betrachtet. Nachteilig ist indessen bei der alleinigen Berücksichtigung des Schwellwerts $R_0$ als Einschaltkriterium für den Scheibenwischer, daß der Scheibenwischer solange wischt, bis dieser Schwellwert $R_0$ erreicht ist, d h. er wischt auch dann noch, wenn er bereits die auf der Windschutzscheibe vorhandenen Regentropfen weggewischt hat, der Gesamtwiderstandswert wegen der verbleibenden Restfeuchtigkeit aber noch unterhalb von $R_0$ liegt. Dies ist für den Kraftfahrzeugfahrer befremdlich, weil er keinen Grund für weitere Wischvorgänge erkennen kann.

Gemäß einer Ausgestaltung der Erfindung wird deshalb als weiteres Kriterium für das Einschalten des Scheibenwischers eine fallende Kennlinie des Widerstandswerts herangezogen. Der Scheibenwischer wird also nur dann betätigt, wenn einerseits der Schwellwert $R_0$ erreicht oder unterschritten wurde und wenn andererseits der Widerstandswert absinkt. Hierdurch ist gewährleistet, daß der Scheibenwischer ausschließlich bei Regen oder kräftigen Feuchtigkeitsspritzern wischt und nicht bei schon gewischter Scheibe solange auf der klaren Scheibe herumwischt, bis der Widerstandswert $R_0$ erreicht ist.

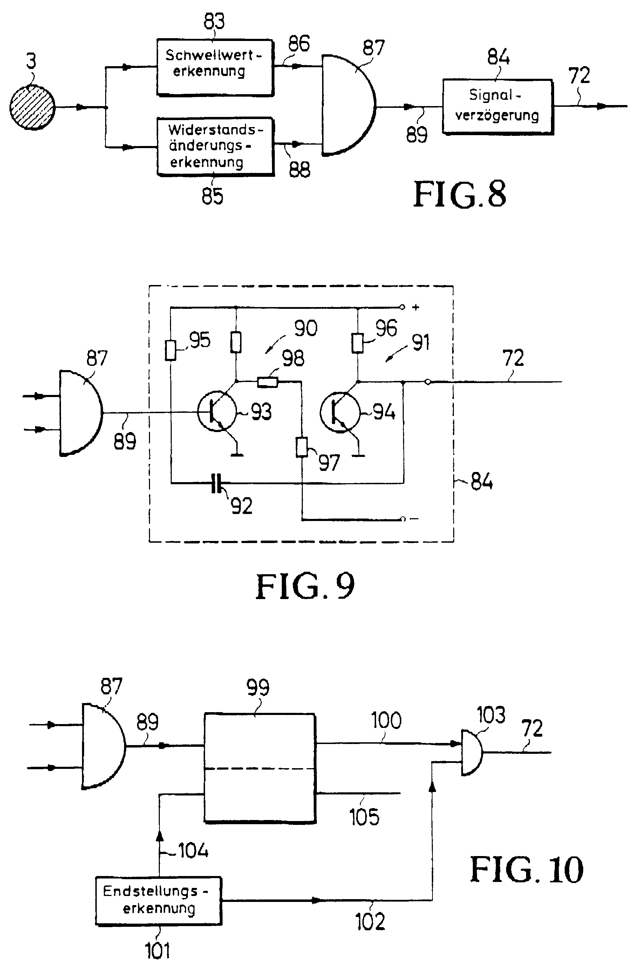

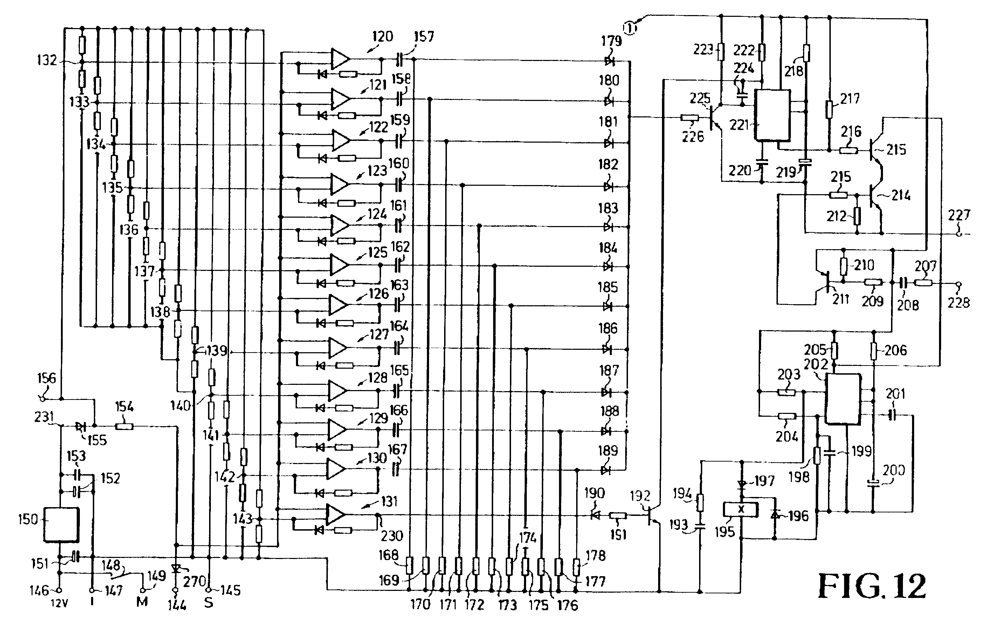

In der Fig. 8 ist eine Schaltungsanordnung dargestellt, welche im Prinzip zeigt, wie der oder die Scheibenwischer entsprechend der Ausgestaltung der Erfindung gesteuert werden. Mit 83 ist hierbei wieder die Einrichtung bezeichnet, die das Erreichen des ohmschen Schwellwerts $R_0$ des Sensors 3 erkennt. Ist dieser Schwellwert erreicht oder unterschritten, so gibt die Einrichtung 83 einen Befehl 86 auf einen Eingang eines UND-Gatters 87. Mit Hilfe einer weiteren Einrichtung 85 wird erkannt, ob der Widerstandswert R = f(t) abnimmt oder zunimmt. Nur bei abnehmendem Widerstandswert gibt die Einrichtung 85 einen Befehl 88 auf das UND-Gatter 87, der mit dem Befehl der Einrichtung 83 nach Polarität übereinstimmt. Als besonders vorteilhafte und zusätzliche Maßnahme kann die Einrichtung 85 so ausgebildet sein, daß sie nicht nur die Abnahmetendenz des Widerstands erkennt, sondern auch den Betrag festlegt, um den der Widerstand abnehmen muß, damit eine Änderungstendenz als relevant angesehen wird. Hierbei kann zusätzlich die Zeit festgelegt werden, innerhalb welcher der besagte Änderungsbetrag auftreten muß. Einzelheiten zu dieser Fortbildung werden im Zusammenhang mit der Fig. 12 beschrieben.

Das UND-Gatter 87 schaltet bei der einfachen Version nur dann durch, wenn der Widerstandswert $R_0$ erreicht oder unterschritten wurde und gleichzeitig die Tendenz des Widerstands fallend ist. Bei der weiteren Ausgestaltung muß darüber hinaus die Änderung noch einen bestimmten Betrag übersteigen, damit das UND-Gatter 87 durchschaltet. Mit dem Ausgangssignal 89 des UND-Gatters 87 könnte nun ein Scheibenwischer angesteuert werden, wenn man in Kauf nähme, daß ein Regenspritzer nach dem letzten Wischvorgang, d.h. nach dem letzten Überstreichen des Sensors 3 durch ein Wischerblatt, keine Neu-Auslösung des Scheibenwischermotors zur Folge hätte. Gemäß der vorliegenden Erfindung wird jedoch das Signal der Leitung 89 verzögert auf die Leitung 72 gegeben, wobei die Verzögerung durch die Signalverzögerung 84 bewirkt wird.

Eine Verzögerungsschaltung 84 ist in der Fig. 9 näher dargestellt. Es handelt sich hierbei um eine monostabile Kippstufe, die dazu dient, die über den Eingang 89 eingegebene logische Information über einen begrenzten Zeitraum zu speichern. Nach Ablauf der Zeit kippt die Stufe automatisch wieder in die Ausgangslage zurück. Die Schaltung der monostabilen Kippstufe ergibt sich durch Reihenschaltung zweier Umkehrstufen 90, 91, wobei der Ausgang der zweiten Stufe 91 auf den Eingang der ersten Stufe 90 über einen Kondensator 92 zurückgekoppelt ist. Im Ruhezustand ist der Transistor 93 leitend und der Transistor 94 gesperrt. Ein am Eingang 89 wirkender Impuls sperrt den Transistor 93, und demzufolge wird der Transistor 94 eingeschaltet. Der plötzliche Spannungssprung am Ausgang 72 verursacht eine Umladung des Rückkopplungskondensators 92, wodurch der Transistor 93 auch nach dem Verschwinden des Eingangsimpulses noch gesperrt bleibt. Erst nachdem sich der Kondensator 92 über einen Widerstand 95 wieder entladen hat, kippt die Stufe in ihre Ruhelage zurück. Die Verweilzeit wird durch das Produkt aus Widerstand 95 und Kondensator 92 bestimmt, so daß bei Wahl eines variablen Widerstands 95 die Verweilzeit eingestellt werden kann. Die Widerstände 96 bis 98 dienen lediglich zur Vorspannung. Die monostabile Kippstufe kann selbstverständlich auch durch die Kombination einer bistabilen Kippstufe mit einem Schnitt-Trigger realisiert werden. Ist am Scheibenwischer oder Scheibenwischermotor eine Positionserkennung vorgesehen, mit der es möglich ist, die Winkellage des Scheibenwischers festzustellen, so kann auch die Zeit berechnet werden, die der Scheibenwischer bis zu seiner Endlage benötigt. Mit diesen Größen - Zeit und/oder Winkellage - kann die Verzögerungszeit der Verzögerungsschaltung 84 regelbar gesteuert werden, so daß der neue Steuerimpuls für den Scheibenwischer exakt in der Ausgangslage erfolgt. Eine besondere Einrichtung zum Erkennen der Ausgangsposition des Scheibenwischers ist in diesem Fall nicht erforderlich.

Die Fig. 10 zeigt eine andere Schaltungsanordnung, bei der die zeitverzögerte Einschaltung mittels eines Flipflops 99 erfolgt. Liegt die UND-Bedingung am UND-Gatter 87 vor, so gibt dieses Gatter 87 einen Startimpuls 89 ab. Dieser Startimpuls bewirkt jedoch noch nicht den Neustart des Scheibenwischers, sondern nur das Setzen des Flipflops 99. Hierdurch wird der Ausgang 100 des Flipflops 99 aktiviert. Erreicht nun der Scheibenwischer seine Endstellung, was durch die Endstellungserkennung 101 detektiert wird, so gelangt ein Impuls über die Leitung 102 zu einem UND-Gatter 103, das nun durchschaltet, weil seine UND-Bedingung erfüllt ist. Das an seinem Ausgang 72 anstehende Signal legt hierauf den Motor 70 an Spannung. Mit einer geringen Zeitverzögerung setzt die Endstellungserkennung 101 das Flipflop 99 über die Leitung 104 wieder in seine Ausgangslage zurück. Die zweite Ausgangsleitung 105 des Flipflops 99 wird nicht benötigt. Die Information "Wischer in Ruhelage" ist bei heute üblichen Scheibenwischersteuerungen direkt als Potentialzustand abgreifbar. Es bedarf deshalb in der Praxis keiner besonderen Vorrichtung 101 für die Endstellungserkennung. Ein Steueranschluß eines automatischen "Null-Rücklaufs" der Scheibenwischermotoren führt in Ruhelage ein Massepotential, während der Wischbewegung jedoch nicht. Es sind auch Scheibenwischer bekannt, bei denen der automatische Null-Rücklauf durch einen mechanischen Kontakt realisiert wird. Auch hierdurch ist die Information "Ruhelage" erhältlich.

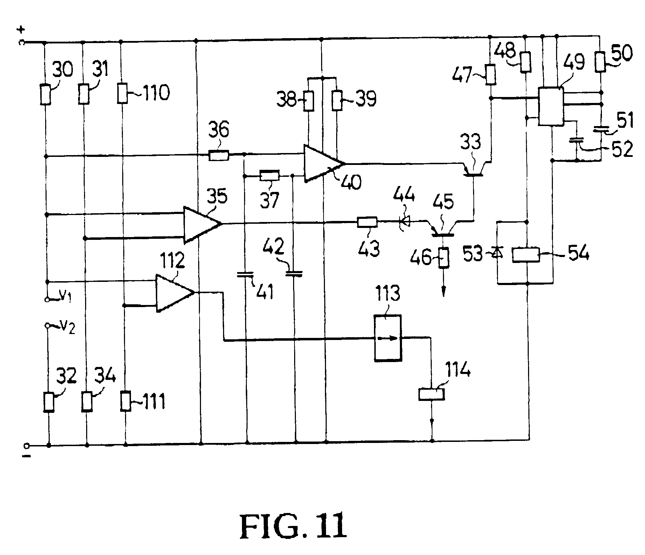

In der Fig. 11 ist eine Schaltungsanordnung dargestellt, mit welcher das in der Fig. 8 dargestellte Prinzip realisiert werden kann. Es versteht sich, daß andere Schaltungsanordnungen möglich sind Dergleichen ist es möglich, die erforderliche Funktion mit Hilfe eines geeignet programmierten Mikrocomputers zu realisieren.

Die Enden $V_1$, $V_2$ des z. B. in der Fig. 2 gezeigten Sensors 3 liegen über Widerstände 30 bzw. 32 an Gleichstromplus- bzw. Gleichstromminuspotential. Da der ohmsche Widerstandswert des Sensors 3 veränderlich ist, ändert sich auch die Spannung, die zwischen den Widerständen 30 und 32 am Sensor 3 abfällt. Dieser sich ändernde Spannungswert wird durch eine Schwellwertüberwachungseinrichtung 35 überwacht, die einen Referenzspannungswert an einem aus zwei Widerständen 31, 34 bestehenden Spannungsteiler abgreift. Funktionsmäßig entspricht die Schwellwertüberwachungseinrichtung 35 der Schwellwerterkennung 83 von Fig. 8. Mit Hilfe der Widerstände 31, 34 kann ein Widerstandsschwellwert eingestellt werden, bei dessen Unterschreiten am Ausgang der Überwachungseinrichtung 35 ein Signal auftritt. Bei dieser Überwachungseinrichtung 35 kann es sich z.B. um einen als Schwellwertschalter geschalteten Operationsverstärker LM 741 handeln. Das Ausgangssignal wird sodann einem Widerstand 43 zugeführt, dem eine Zenerdiode 44 nachgeschaltet ist, deren Anode am Emitter eines Transistors 45 und deren Kathode an dem besagten Widerstand 43 liegt. Aufgabe dieser Zenerdiode 44 ist es, ein vorzeitiges Durchschalten der Transistoren 45, 33 zu verhindern, d. h. ein Durchschalten bei zu niedriger Ausgangsspannung der Überwachungseinrichtung 35, beispielsweise wenn der Operationsverstärker mit nur zwei Potentialen betrieben wird.

Mit Hilfe einer weiteren Überwachungseinrichtung 40, die funktionsmäßig der Widerstandsänderungserkennung 85 gemäß Fig. 8 entspricht und bei der es sich z. B. um ein Differenzierglied handelt, das durch einen Operationsverstärker LF 357 realisiert ist, wird festgestellt, ob der Widerstandswert des Sensors 3 abfällt oder ansteigt. Durch die Rückkopplungswiderstände 38, 39 wird hierbei die Steilheit des Abfalls oder Anstiegs festgelegt. Die aktuelle Ist-Spannung, die mit einer vorangegangenen Ist-Spannung verglichen wird, gelangt über einen Widerstand 36 an einen Eingang der Einrichtung 40. Die zeitlich vorangegangene Spannung wird dagegen über den Widerstand 36 in einem Kondensator 41 und über die Widerstände 36, 37 in einem Kondensator 42 gespeichert.

Das im Zusammenhang mit der Fig. 8 beschriebene UND-Gatter 87 wird in der Fig. 11 durch die Transistoren 33 und 45 realisiert. Befindet sich der Scheibenwischer in seiner Ausgangsposition, so steuert ein Befehlssignal über einen Widerstand 46 den Transistor 45 an. Der Widerstand 46 stellt hierbei die Klemme eines Wischermotors dar, die im Nullpunkt des Wischers ein Minuspotential abgibt. Der Transistor 45 gibt hierauf das von der Einrichtung 35 kommende Signal auf die Basis des Transistors 33 weiter, worauf dieser Transistor 33 durchgeschaltet wird und das von der Einrichtung 40 kommende Signal auf ein Zeitglied 49, z.B. auf einen Timer NE 555, gibt. Dieses Zeitglied 49 entspricht der Signalverzögerung 84 gemäß Fig. 8. Die Impulsdauer dieses Zeitglieds wird durch einen Widerstand 50 und einen Kondensator 51 bestimmt. Die Widerstände 47, 48 und der Kondensator 5 dienen zur üblichen Beschaltung des Zeitglieds 49. Für eine durch das Zeitglied 49 festgelegte Zeit wird ein Schaltrelais 54 angesteuert, das hierauf einen nicht dargestellten Scheibenwischermotor betätigt. Dieses Schaltrelais 54 entspricht funktionsmäßig im wesentlichen dem Relais 71 in Fig. 7. Parallel zum Schaltrelais 54 ist eine Kurzschlußdiode 53 geschaltet, welche die Selbstinduktion der Relaisspule kurzschließt. Das Relais 54 legt also eine Betriebsspannung an einen Wischermotor und trennt z. B. den Rücklaufstromkreis auf. Der Rücklaufstromkreis wird in der Fig. 7 durch das Relais 76 symbolisiert.

Durch Verändern der Schaltzeit des Zeitglieds 49 bei einer Wischfrequenz unterhalb eines bestimmten Wertes, die z. B. bei starkem Regen eingestellt wird, können Wischpausen vermieden werden, die störend wirken. Störend sind solche Wischpausen, bei denen der Scheibenwischer für nur relativ kurze Zeit in Ruhe verharrt, so daß sich die Ruhe nicht "lohnt", sondern ein kontinuierliches Wischen angenehmer wäre. Um diese unangenehmen Aus-Zeiten zu vermeiden, kann die Schaltzeit des Zeitglieds 49 bei Vorliegen der UND-Bedingung am UND-Glied 87 jedesmal neu gesetzt werden.

Für die Realisierung der Widerstandsänderungserkennung können Differenzierglieder verwendet werden (vgl. Beuth. Schmusch: Grundschaltungen der Elektronik, Band 3, 4. Aufl., 1981, S. 223, Bild 712 und S. 288, 291), mit denen es möglich ist, positive oder negative Steigungen einer Kurve zu erkennen. Für die Ermittlung des Grads der Änderung können mehrere Schwellwertschalter mit jeweils unterschiedlichen Schwellwerten verwendet werden, was im Zusammenhang mit der Fig. 12 noch näher beschrieben wird.

Mit einem weiteren Spannungsteiler 110, 111 kann ein weiterer Schwellwertschalter 112 angesteuert werden, der ein Zeitglied 113 ansteuert, welches ein Relais 114 betätigt, das einen Wisch-Wasch-Vorgang einleitet. Bei einem Wisch-Wasch-Vorgang wird bekanntlich Wasser auf die Scheibe gespritzt und anschließend mehrere Male gewischt. Eine solche Wisch-Wasch-Anlage kann auch für Scheinwerfer vorgesehen sein.

In der Fig. 12 ist eine Schaltungsanordnung mit mehreren Schwellwertschaltern 120 bis 131 dargestellt, die jeweils an verschiedenen Spannungsteilern 132 bis 143 liegen.

Mit 144, 145 sind die beiden Ausgangsanschlüsse des Sensors 3 bezeichnet. Die Gleichspannungsversorgung erfolgt über die Anschlüsse 146, 147, wobei der Anschluß 146 über einen Relaiskontakt 148 an einen Motor 149 gelegt werden kann. Mit den Schwellwertschaltern 120 bis 131 ist es möglich, zwölf verschiedene Schwellen zu erfassen, was im Hinblick auf den komplizierten Kurvenverlauf der Fig. 5 erforderlich ist.

Parallel zur Spannungsquelle 146, 147 ist ein Kondensator 151 geschaltet, dem ein Spannungs-Stabilisator 150 und zwei Kondensatoren 152, 153 nachgeschaltet sind. Zwischen dem Ausgangsanschluß 144 und diesen Kondensatoren 152, 153 liegen eine Diode 270, ein Widerstand 154 und eine weitere Diode 155. Die Spannungen vor und hinter der Diode 155 werden an den Anschlüssen 156, 231 abgegriffen.

Die Schaltungsanordnung gemäß Fig. 12 beinhaltet sowohl die Schwellwerterkennung als auch die Widerstandsänderungserkennung. Die Schwelle $R_0$ wird beispielsweise durch den Schwellwerterkenner 120 erkannt, während mit der übrigen Schwellwerterkennung die Widerstandsänderung bzw. der Betrag der Widerstandsänderung festgestellt wird. Fällt der Schwellwertschalter 120 aus, so kann der nächste Schwellwertschalter 121 die Grundschwelle festlegen, die nun gegen $R_0$ etwas versetzt ist.

Alle Schwellwerterkenner 120 bis 130 mit den jeweils nachgeschalteten Kondensatoren 157 bis 167 geben nur dann ein Signal ab, wenn ihre jeweilige Schwelle in einer bestimmten Richtung überschritten wird. Da jede Schwellwertüberschreitung eine Änderung des Meßwerts beinhaltet und da die Schwellwertschalter 120 bis 130 z. B. nur bei fallenden Widerstandswerten ein Signal abgeben, deutet ein Ausgangssignal eines Schwellwertschalters darauf hin, daß sich der Widerstandswert verringert hat, und zwar an derjenigen Stelle, die von dem jeweiligen Schwellwertschalter überwacht wird. Mit Hilfe mehrerer Schwellwertschalter 120 bis 130 wird es ermöglicht, die gerichteten Spannungsänderungen an mehreren Punkten einer sich ändernden Widerstandskurve zu erfassen. Berührt beispielsweise ein Wischblatt den Sensor 3, so stellt dies fast einen Kurzschluß dar, so daß alle Schwellwertschalter ansprechen. Nimmt anschließend der Widerstandswert wieder zu, weil das Wischblatt den Sensor verlassen hat, so kippen z. B. nur der zwölfte, elfte, zehnte und neunte Schwellwertschalter zurück. Die übrigen Schwellwertschalter bleiben wegen Restfeuchtigkeiten und dergleichen aktiviert.

Bei einem idealen Wischvorgang müßte der Widerstandswert des Sensors 3 nach dem letzten Wischvorgang - und wenn danach keine Benetzung mehr auftritt - von einem relativ niedrigen Widerstandswert auf einen sehr hohen Widerstandswert angehoben werden, weil eine ideale Trocknung des Sensors 3 zu einem unendlich hohen Widerstandswert führt. Daß diese Annahme der Praxis nicht entspricht, wurde bereits oben näher erläutert. Zur Vermeidung der aus diesem Sachverhalt resultierenden Nachteile wurde die Widerstandsänderungserkennung 85 eingeführt.

Damit sind jedoch noch nicht alle Nachteile beseitigt, die durch die realen Sachverhalte bedingt sind Betrachtet man eine Kurve, die der Kurve der Fig. 5 entspricht, genauer, so stellt man fest, daß sie in der Praxis Bereiche aufweist, in denen die UND-Bedingung am Gatter 87 erfüllt ist, d. h. der Widerstandsabfall und das Unterschreiten der Widerstandsschwelle sind nur für eine Zeit gegeben, in der keine steigende Grundtendenz vorliegt, so daß es sich eigentlich nicht lohnt, einen Steuerimpuls auf den Scheibenwischermotor zu geben. Auch bei einer relativ kleinen Änderung des Sensorsignals, d. h. wenn die Steigung der Kurve in dem betrachteten Bereich sehr niedrig ist, ist eine Neu-Ansteuerung des Scheibenwischermotors nicht erwünscht. Besser wäre es deshalb, eine Neu-Ansteuerung nur dann vorzunehmen, wenn die Amplitudengröße des Sensorsignals einen bestimmten Schwellwert $R_0$ unterschritten hat, außerdem eine Widerstandsänderung mit fallender Tendenz vorliegt und schließlich Dauer und/oder Amplitudengradient eine bestimmte Größe überschreiten. Alle diese Bedingungen werden durch die Schaltungsanordnung gemäß Fig. 12 realisiert, die über zwölf Stufen verfügt, mit denen verschiedene Empfindlichkeiten eingestellt werden. Selbstverständlich können auch mehr oder weniger Stufen vorgesehen sein, je nach der geforderten Exaktheit. Durch diese Stufen werden sehr Kleine Veränderungen im Verlauf der Kurve gemäß Fig. 5 geglättet. Nimmt der Widerstand des Sensors 3 z. B. fortlaufend ab, so sprechen die Schwellwertschalter 120 bis 131 nacheinander an und geben einen Impuls ab. Beim niedrigsten Widerstandswert wird auch der letzte Schwellwertschalter 131 aktiviert. Nimmt anschließend der Widerstandswert wieder zu, so kippen die Schwellwertschalter bei einem Wert zurück, der nicht mit demjenigen Wert übereinstimmt, bei dem der jeweilige Schwellwertschalter angesprochen hatte. Bei zunehmendem Widerstand kippen folglich alle Schwellwertschalter 131 bis 120 etwas versetzt zurück. Durch das versetzte Rückfallen der Schwellwertschalter wird erreicht, daß eine Beruhigung der Durchschaltung im Schaltpunkt der Schwellwertschalter selbst erfolgt. Andernfalls würde bereits ein Widerstandswert, der in der unmittelbaren Nähe des Schwellwerts liegt, wieder eine Auslösung des Schwellwertschalters bewirken. Durch den Sicherheitsabstand, der durch die verschiedenen Schaltpunkte hergestellt wird, bleiben die kleinen Schwankungen der Widerstandskurve um den Schaltpunkt herum ohne negativen Einfluß. Wird bei fallendem Widerstandswert auf die letzte Stufe 131 aktiviert und nicht mehr zurückgesetzt, so bedeutet dies einen hohen Feuchtigkeitsgrad auf der Scheibe, der den Übergang zum Dauerwischen bewirkt.

Von den jeweils an den Ausgängen der Schwellwertschalter 120 bis 130 liegenden Kondensatoren 157 bis 167, die über jeweils einen der Widerstände 168 bis 178 an Minuspotential am Punkt 147 liegen, wird ein Signal nur bei steigender Amplitude über eine der Dioden 179 bis 189, einen Widerstand 226 und einen endgesteuerten Transistor 225 auf einen Signalspeicher 221 gegeben, und zwar in Form eines Impulses. Ein Kondensator 161, der Spannungsschwankungen vermindern soll, liegt parallel zu den Eingangsklemmen 146, 147. Der Signalspeicher 221, der mit der Signalverzögerung 84 vergleichbar ist, ist ein Timer oder Zwischenspeicher, der jeweils einen Nadelimpuls erhält, weil die Kondensatoren 157 bis 167 Dauersignale nicht zulassen, sondern nur bei zeitlichen Spannungsänderungen einen Impuls abgeben.Durch das Vermeiden von Dauersignalen wird nur das jeweilige Setzen der Schwellwertschalter 120 bis 130 erkannt. Jeder der auf den Signalspeicher 221 gegebenen Nadelimpulse ist ein Startimpuls für den Scheibenwischermotor. Dieser Startimpuls bewirkt jedoch während des Wischvorgangs von der Ausgangslage bis zurück zum Sensor lediglich, daß der Signalspeicher 221 gesetzt und wieder zurückgesetzt wird. Da der Signalspeicher 221 eine fest vorgegebene Speicherzeit hat, die der Zeit entspricht, die der Wischer auf dem Rückweg vom Sensor, d. h. vom Verlassen des Sensors, bis zur Ausgangsstellung benötigt, z. B. 500 msec, wird die Speicherzeit bei jedem Impuls zwar aktiviert, bleibt aber bis zum Erreichen des Sensors auf dem Rückweg des Scheibenwischers wirkungslos. Erst wenn der Scheibenwischer den Sensor auf dem Rückweg überstrichen hat, bewirken die während der letzten Scheibenwischerbewegung auftretenden Impulse, daß die Signalzeit wirklich gesetzt wird, weil die jetzt noch kommenden Impulse keine Rücksetzung des Zeitglieds mehr zur Folge haben. Der Signalspeicher 221 wird also von jedem Impuls derart gestartet, daß er zu laufen beginnt. Taucht ein neuer Impuls auf, startet er wieder von vorne und beginnt erneut mit der Laufzeit. Erst die Impulse, die ihn ab der Endflanke oder -tangente des Sensors erreichen, bewirken, daß in jedem Fall eine Speicherzeit von z. B. 500 msec gewährleistet ist. Taucht nur ein Impuls unmittelbar am hinteren Sensor-Berührungspunkt und sonst kein weiterer Impuls auf, so reicht dieser Impuls aus, um die 500 msec zu gewährleisten, weil der Signalspeicher auf diesen Betrag eingestellt ist. Jeder nachfolgende Impuls läßt den Signalspeicher 221 zwar wieder von vorn starten, doch schadet dies nichts, weil dann die 500 msec in jedem Fall ausreichen, um in der Endlage des Scheibenwischers eine UND-Bedingung zu bewirken. Das Startsignal wird folglich verzögert weitergegeben. Es tritt somit nur dann auf, wenn folgende Bedingung erfüllt ist; Widerstandsschwellwert unterschritten, gerichtete Änderungstendenz des Widerstandswerts ist erkannt und der Betrag der Änderung entspricht einem vorgegebenen Wert.

Die Beschaltungswiderstände 217, 218, 222, 223 und Beschaltungskondensatoren 219, 220, 224 sind so ausgelegt daß an einem Basiswiderstand 216 eines Transistors 215 dieses Signal als ein L-Signal ansteht Dieses L-Signal steht für eine Zeit an, die durch den Widerstand 218 und den Kondensator 219 bestimmt wird, wobei es sich, wie bereits erwähnt, um diejenige Zeit handelt, die von der letzten Berührung des Sensors durch den Wischer bis zum Erreichen der Ruhelage des Wischers vergeht.

Der Schwellwertschalter 131 hat im Gegensatz zu den Schwellwertschaltern 120 bis 130 keinen Kondensator am Ausgang und steuert über eine Zener-Diode 190, einen Widerstand 191 und einen Transistor 192 einen Seteingang des Signalspeichers 221 an. Dies hat zur Folge, daß bei Erreichen dieser Stufe bis zu ihrer Rücksetzung das Ausgangssignal des Signalspeichers 221 als Basisstrom des Transistors 215 und damit als eine UND-Bedingung ansteht, denn bei Erreichen des letzten Schwellwertschalters 131 bis zu seiner Rücksetzung soll Dauerwischen gewährleistet sein, weil erst nach der Rücksetzung mindestens einer der Schwellwertschalter 120 bis 131 eine neue Benetzung des Sensors 3 ausgewertet werden kann.

Die Endpositions-Erkennung für den Scheibenwischer ist in der Fig. 12 durch einen Widerstand 207, einen Kondensator 208, einen Widerstand 209, einen Widerstand 210, einen Transistor 211, einen Widerstand 212, einen Widerstand 213 und einen Transistor 214 realisiert. Steht somit an den Klemmen 227, 228 ein elektrisches Signal an, das auf die Ruhelage des Scheibenwischers hinweist, so wird dieses Signal erkannt, und negatives Potential ist damit als weitere UND-Bedingung auf den Emitter des Transistors 215 gegeben, d. h. der Transistor 215 schaltet durch.

Der Transistor 215 gibt bei Vorliegen der weiteren UND-Bedingung ein Startsignal an einen zweiten Signalspeicher oder Timer 202, dessen Beschaltung aus einem Widerstand 198, einem Kondensator 200, einem Kondensator 201, einem Widerstand 203, einem Widerstand 204, einem Widerstand 205 und einem Widerstand 206 besteht.

Dieser zweite Signalspeicher 202 setzt für eine Zeit, die durch den Kondensator 200 und den Widerstand 206 bestimmt wird, ein Relais 195, das mit einem Kondensator 193, einem Widerstand 194, einer Diode 196 und einer Diode 197 beschaltet ist. Diese Beschaltung dient zur sicheren Entstörung des Signalspeichers oder Timers 202, der auf Induktionsströme des schaltenden Relais sonst sehr störempfindlich reagieren könnte. Die gesamte Beschaltung des Signalspeichers 202 ist von untergeordneter Bedeutung, da sie nur dazu dient, das Relais 195 definiert anzusteuern, das seinerseits den Scheibenwischermotor betätigt.

Mit der Schaltungsanordnung gemäß Fig. 12 ist es somit möglich, die Auslösung des Scheibenwischers in besonders vorteilhafter Weise vorzunehmen. Stellt man sich beispielsweise die Kurve des Widerstandswerts vor, wie sie ohne das Auftreten einer erneuten Benetzung - also nur aufgrund der vorhandenen Restfeuchte und der Verschmutzung - verlaufen wäre, und vergleicht man diesen Kurvenlauf mit dem allein durch die Benetzung erzeugten Kurvenverlauf, der als solcher allerdings nicht meßbar ist, weil er dem Nicht-Benetzungs-Kurvenverlauf überlagert ist, so zeigt sich, daß es oberhalb einer vorbestimmten Amplitudengröße des Widerstands und bei einer Amplitudenänderung in der vorgegebenen Richtung eine Fehlauslösung geben könnte, wenn nicht der Betrag der Veränderung als zusätzliches Kriterium eingeführt würde. Verändert sich beispielsweise die theoretische Nicht-Benetzungskurve nur geringfügig aufgrund irgendwelcher Beeinflussungen, z. B. durch den Fahrtwind, der die Restfeuchte vermindert, oder durch eine zusätzliche leichte Verschmutzung, so kann bereits ein winziges Tröpfchen Feuchtigkeit eine Scheibenwischerauslösung bewirken, weil der einzig meßbare tatsächliche Widerstandsverlauf derjenige ist, der durch dieses Tröpfchen mitbestimmt wird. Dieser Widerstandsverlauf erhält durch das Tröpfchen eine Änderungstendenz in Richtung auf niedrigere Widerstandswerte, so daß ohne einen zusätzlichen Empfindlichkeitsdämpfer dieses Tröpfchen eine Auslösung des Scheibenwischers bewirken würde, obwohl der Einfluß des Tröpfchens auf die ohnehin vorhandene Restfeuchtigkeit extrem gering ist. Durch die Möglichkeit, die Empfindlichkeit durch Zuschaltung mehrerer Schwellwertschalter zu verringern, kann somit ein unnötiges Betätigen der Scheibenwischer verhindert werden.

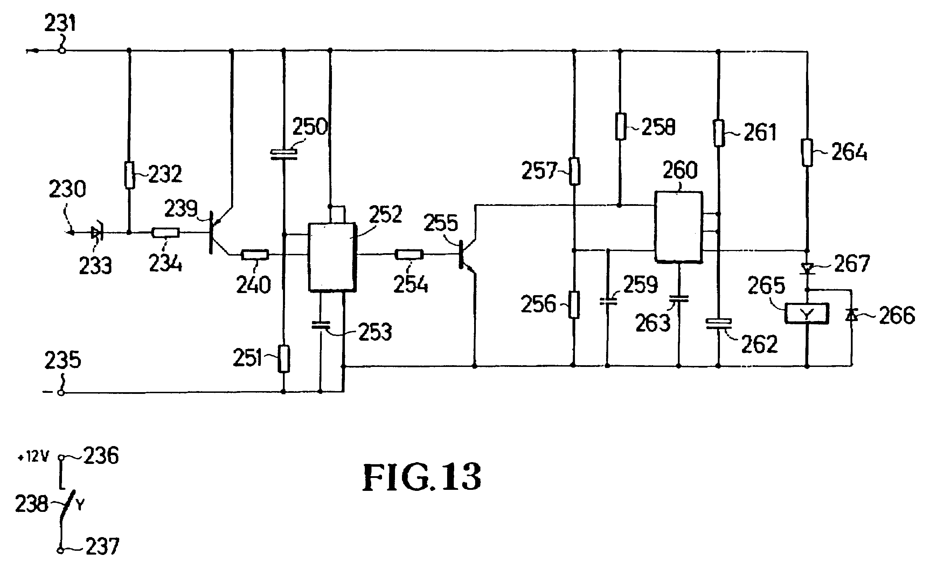

In der Fig. 13 ist eine Schaltungsanordnung dargestellt, welche den Waschvorgang einleitet. Anders als der Wischvorgang, der eine Benetzung der Scheibe voraussetzt, setzt der Wischvorgang eine Verschmutzung der Scheibe voraus. Bei den bekannten Steuerungen für Scheibenwischer, wie sie etwa aus der Patentanmeldung PCT/DE88/00374 = WO 89/00119 bekannt sind, werden die Scheibenwischer unabhängig von einer eventuell vorhandenen Scheibenwaschanlage gesteuert. Derartige Scheibenwaschanlagen sind indessen bei neueren Fahrzeugen oft mit den Scheibenwischern zu einer sogenannten Wisch-Wasch-Anlage zusammengefaßt. Die Wisch-Wasch-Anlage hat die Aufgabe, die Windschutzscheibe zu reinigen, beispielsweise wenn sie durch tote Insekten verschmutzt ist. Hierfür wird durch eine Waschanlage gewissermaßen künstlicher Regen erzeugt.

Die in der Fig. 12 beschriebene Anordnung kann durch leichte Modifizierung dahingehend abgewandelt werden, daß sie auch den Wisch-Wasch-Vorgang automatisch steuert. Hierfür ist eine Einrichtung vorgesehen, welche den Verschmutzungsgrad der Windschutzscheibe erkennt und bei einem vorgegebenen Schwellwert des Verschmutzungsgrads die Wisch-Wasch-Anlage ein- bzw. ausschaltet. Diese Einrichtung kann Bestandteil der bereits beschriebenen Feuchtigkeitserkennungsschaltung sein, wie nachfolgend beschrieben ist. Der Anschluß 231 der Schaltung gemäß Fig. 13 ist hierbei mit dem Anschluß 231 gemäß Fig. 12 identisch, während der Anschluß 230 mit dem Anschluß 230 der Fig. 12 identisch ist, d. h. es wird das Signal an der zwölften Schwellwertstufe abgegriffen. Der Anschlußpunkt 235 stimmt mit dem Anschlußpunkt 147 der Fig. 12 überein.

Die Stufe zwölf bzw. der Schwellwertschalter 131 in Fig. 12 oder auch eine zusätzliche Stufe, die nicht dargestellt ist, erfordern eine bestimmte Amplitudenhöhe, damit sie gesetzt bleiben. Diese Amplitudenhöhe wird indessen selbst bei extrem starkem Regen zumindest kurzzeitig nach jedem Trokkenwischen des Sensors deutlich unterschritten. Ist die Windschutzscheibe 2 und damit der Sensor 3 jedoch über einen durch den Schwellwert dieser Stufe bestimmten Grad hinaus verschmutzt, so wird diese Stufe nicht durch die Bewegung des Wischers 6 über den Sensor 3 zurückgesetzt. Durch eine nur langsam trocknende und gut leitende Verschmutzung bleibt diese Stufe für lange Zeit gesetzt, die bei sauberer Windschutzscheibe niemals erreicht würde. Dies erkennt der Timer 252 in Fig. 13 aufgrund seiner äußeren Beschaltung, die aus einem Transistor 239, einem Widerstand 240, einem Widerstand 251, einem Kondensator 253 und einem weiteren Kondensator 250 besteht, und gibt nach Ablauf der durch den Widerstand 251 und den Kondensator 256 bestimmten Zeit einen Impuls von dieser Stufe, d. h. vom Eingangsanschluß 230, über einen Transistor 255 an einen weiteren Timer 260 ab. Dieser Timer 260 ist mit einem Widerstand 256, einem Widerstand 257, einem Widerstand 258, einem Kondensator 259, einem Widerstand 261, einem Kondensator 262, einem Kondensator 263 und einem Widerstand 264 beschaltet und setzt für eine durch den Widerstand 261 und den Kondensator 262 bestimmte Zeit ein Relais 268. Dieses Relais 268 ist durch die Dioden 266, 267 beschaltet und löst mit seinem Kontakt 238, der zwischen den Klemmen 236, 237 einer Gleichspannungsquelle liegt, eine nicht dargestellte Wisch-Wasch-Anlage aus. Ist durch sehr starke Verschmutzung nach Ablauf dieser Zeit die erwähnte Stufe noch nicht zurückgesetzt, so liegt der Setzimpuls für den Timer 260 noch immer an, wodurch das Relais 268 erregt bleibt und der Wisch-Wasch-Vorgang andauert, bis der Grad der Verschmutzung so weit abgenommen hat, bis der Schwellwertschalter zurückkippt, was durch die Mit-Rückkopplung festgelegt werden kann. Einer der Schwellwertschalter 120 bis 131 gemäß Fig. 12 bildet somit in Verbindung mit einem Zeitglied 252 ein Kriterium dafür, ob die Scheibe verschmutzt ist oder nicht. Das relativ lange Gesetztbleiben einer Schwellwertstufe ist ein Maß für die Verschmutzung. Von den beiden Timern 252, 260 ist der Timer 252 der wichtigere, weil er die Setzzeit festlegt, während der Timer 260 nur zur Beschaltung des Relais 265 dient.

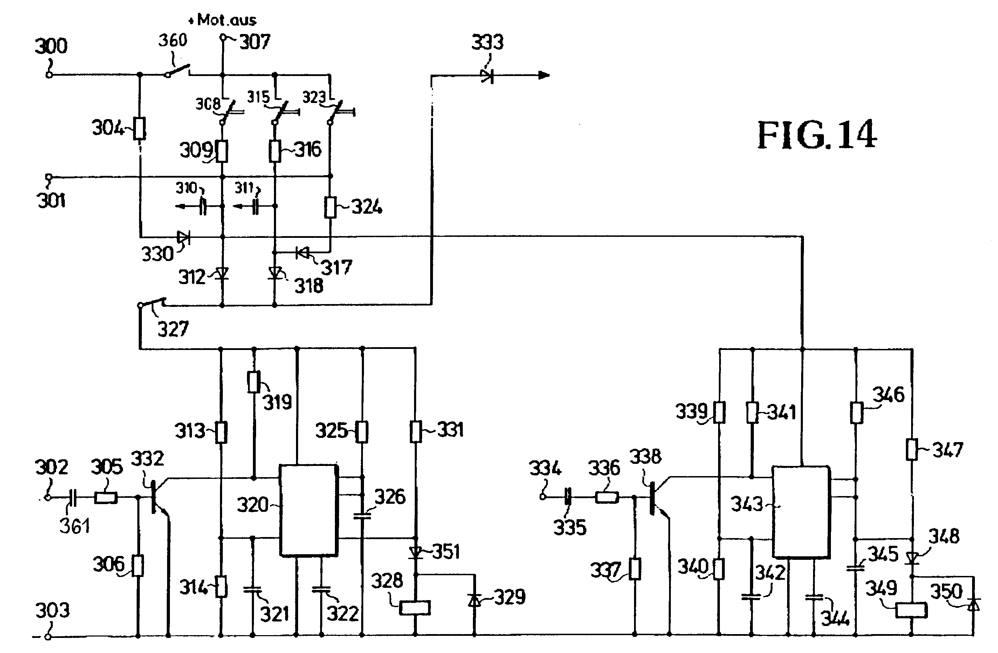

In Fig. 14 ist dargestellt, wie die Erfindung, und zwar insbesondere die Schaltungsanordnung gemäß Fig. 12, zur Betätigung eines elektrischen Schiebe-Hub-Daches oder des Verdecks eines Cabriolets eingesetzt werden kann.

Bei benutztem Fahrzeug sollte dem Fahrer die Entscheidung darüber, welche Stellung das Schiebedach einnehmen soll, überlassen bleiben, während bei abgestelltem Fahrzeug mit geöffnetem Schiebedach oder Verdeck der Fahrer die Einschaltung der jeweils richtigen Schiebedachstellung nicht "vergessen" darf. Ist das Fahrzeug abgestellt und der Motor ausgeschaltet, so liegt über den Anschluß 307 ein Pluspotential an den Kontakten 308 und 315 eines Schiebe-Hub-Daches an. Ist der Kontakt 308 geschlossen, so bedeutet dies, daß das Dach horizontal geöffnet ist, während der geschlossene Kontakt 315 bedeutet, daß das Hubdach geöffnet ist. Durch die Zustände "Motor aus" und "Kontakt 308 geschlossen" gelangt Pluspotential auf den linken Schaltungsteil mit dem Timer 320 sowie auf den rechten Schaltungsteil mit dem Timer 343. Aufgrund der Bedingung "Motor aus" und "Kontakt 315 geschlossen" gelangt Pluspotential nur auf den linken Schaltungsteil. In beiden Fällen wird jedoch über eine Diode 333 auch auf die Schwellwertschalter 120 bis 131, inklusive deren Eingangsbeschaltung (Fig. 12), Pluspotential gegeben.

Der rechte Schaltungsteil mit dem Timer 343 übernimmt bei einem bestimmten Benetzungsgrad des Sensors, z. B. bei Erreichen der Stufe acht, ein Schließen und Heben des Dachs, da ab dieser Niederschlagsmenge ein weiterhin horizontal geöffnetes Schiebedach unerwünscht, eine Huböffnung jedoch noch angemessen ist. Bei einem Cabriolet mit elektrischem Schiebedach würde hier z. B. das Verdeck geschlossen werden.

Der linke Schaltungsteil übernimmt dagegen die vollständige Schließung des Daches, wenn die Benetzung so stark z. B. bei Stufe zwölf, geworden ist, daß auch eine Huböffnung des Daches nicht mehr empfehlenswert ist.

Nicht dargestellt ist für beide Fälle, daß über jeweils ein Zeitglied noch bestimmt werden könnte, wie lange der entsprechende Feuchtzustand gegeben sein müßte, um die jeweilige Funktion auszulösen, da kurze Schauer, wie sie nicht selten vorkommen, vor allem für die Huböffnung vertretbar sind.

Wegen des relativ hohen Strombedarfs der Dachantriebe sind die Dachfunktionen zur Schonung der Fahrzeugbatterie als Einmal-Funktionen ohne Wiederöffnung bei durch die Wetterlage wieder getrocknetem Sensor ausgeführt, was sich durch andere Dachantriebe und/oder Ausnutzung von Solarenergie auch ändern ließe.

Der Kontakt 327 des Relais 349 unterbricht die Anschaltung der Funktion "HUB-DACH" für den Zeitraum, in dem die Funktion "Schließen/Heben" ausgeführt wird, um für den Fall sehr plötzlichen und starken Regens auszuschließen, daß beide Funktionen parallel ausgelöst werden, denn der Dachantrieb kann nicht zwei Funktionen gleichzeitig ausführen.

Die Kontakte 327 bzw. 360 der Relais 349 bzw. 328 übernehmen für die jeweiligen Schaltzeiten parallel zu den Kontakten 308 bzw. 315 die Anschaltung des Pluspotentials an die linke bzw. rechte untere Schaltung mit den Timern 320 bzw. 343, da die Kontakte 308 bzw. 315 gegebenenfalls kurz vor Beendigung der gewünschten Schaltzeiten bereits wieder in Ruhelage, d. h. geöffnet sind. Nicht alle Dachantriebe haben bereits eine Impuls-Steuerung, bei der mit einem einmal gegebenen Impuls die volle Bewegung des Daches durchgeführt wird, vielmehr ist es derzeit üblich, daß sich das Dach nur solange bewegt, wie der Betätigungsschalter - oder hier die Relaiskontakte - in der entsprechenden Position gehalten werden.

Die erneute Ruhelage, wenn also nur ein gehobenes bzw. ganz geschlossenes Dach betrachtet werden, bewirkt nach Abfall des jeweiligen Relais ebenso wie ein erst gar nicht geöffnetes Dach die Abschaltung des Pluspotentials an den Schaltungsteilen.

Die linke untere und die rechte untere Schaltung mit den Timern 320 bzw. 343 sind bis auf die Größe einzelner Bauteile identisch. Kommt aus dem jeweils angeschalteten Schwellwertschalter an der rechten oder linken Schaltung eine Potentialänderung, so wird ein Nadelimpuls an den jeweiligen Timer gegeben.

Die linke Schaltung liegt beispielsweise mit ihrem Anschluß 302 am Punkt 230 des zwölften Schwellwertschalters gemäß Fig. 12, wohingegen die rechte Schaltung mit ihrem Anschluß 334 z. B. am Ausgang des Schwellwertschalters 107 liegt. Eine Potentialänderung der Anschlüsse 302 bzw. 334 und der nachgeschalteten Kondensatoren 361 und 335 führt dazu, daß über einen Widerstand 305 bzw. 336 und einen Transistor 332 bzw. 338 ein Nadelimpuls auf den Timer 320 bzw. 343 gegeben wird. Durch die Beschaltung des Timers 320 mit Widerständen 313, 314, 319, 321, 325 und Kondensatoren 321, 322, 326 und durch die Beschaltung des Timers 343 mit Widerständen 339, 340, 341, 346 und Kondensatoren 342, 344, 345 liegt an dem jeweiligen Timer-Ausgang ein Pluspotential, welches das Relais 328 bzw. 349 setzt. Diese Relais 328 bzw. 349 schalten mit ihren Kontakten 323 bzw. 327 die bereits beschriebene Funktion sowie mit den Schaltern 323 bzw. 360 ein Pluspotential für die Funktionen des Dachantriebs "Schließen/Heben" bzw. "Geschlossen" an die Anschlüsse 300 bzw. 301. Die Schaltzeit der Timer 320, 343 wird durch den Widerstand 325 und den Kondensator 326 bzw. durch den Widerstand 346 und den Kondensator 345 festgelegt. Die Timer 320, 343 haben lediglich die Funktion, die Relais 328, 349 in definierter Weise anzusteuern. Demselben Zweck dienen auch die Beschaltungsdioden 329, 351 bzw. 350, 348.

Wie sich aus der vorstehenden Beschreibung der Ausführungsbeispiele ergibt, ist die Erfindung vielseitig einsetzbar. Aufgrund der Möglichkeit, Feuchtigkeits- und Verschmutzungsgradänderungen auch quantitativ zu erfassen, kann nicht nur ein Scheibenwischer betätigt werden, wenn es wirklich erforderlich ist, sondern es kann auch eine Wisch-Wasch-Anlage eingeschaltet werden, wenn eine hinreichende Verschmutzung der Scheibe besteht. Selbst eine gezielte Ansteuerung eines Schiebedachs, eines Hub-Dachs, eines Hub-Schiebedachs oder eines Cabriolet-Verdecks ist möglich. Hinzu kommt, daß auch noch Spritzer auf den Sensor eine Auslösung des Scheibenwischers bewirken, wenn der Scheibenwischer auf seinem Rückweg zur Endposition den Sensor überstrichen hat.

Die Erfindung kann, wenn ein geschwindigkeitsregelbarer Antriebsmotor vorhanden ist, auch für eine vom Grad der Benetzung oder Verschmutzung der Scheibe abhängige Steuerung verwendet werden. Damit ist eine stufenlose Anpassung z. B. der Scheibenwischergeschwindigkeit an die jeweils vorhandene Nässe möglich.

**Patentansprüche**

1. Einrichtung für die Steuerung eines Antriebsmittels (70) für ein Fahrzeugzubehör, mit
   - einem auf die Nässe auf der Außenseite des Fahrzeugs (1), insbesondere auf der Windschutzscheibe (2), ansprechenden Sensor (3), der ein Signal mit einem vom Grad der Feuchtigkeit abhängigen Parameter erzeugt, und
   - einer Einrichtung (83), welche das Antriebsmittel (70) in Abhängigkeit von der Größe des Parameters des von dem Sensor (3) kommenden Signals ansteuert,

   **gekennzeichnet durch** eine Einrichtung (120 bis 131, 132 bis 143) zur Erkennung des Betrags der Änderung des Parameters innerhalb einer vorgegebenen Zeit und eine weitere Einrichtung (225, 221; 252, 260; 320, 343), welche bei Vorliegen eines bestimmten Betrags dieser Änderung des Parameters das Antriebsmittel (70) ansteuert.

2. Einrichtung nach Anspruch 1, **gekennzeichnet durch** eine Einrichtung (157 bis 167) zur Erkennung der positiven oder negativen Richtung der Änderung des Parameters.

3. Einrichtung nach Anspruch 1, **dadurch gekennzeichnet**, daß das Antriebsmittel ein Scheibenwischermotor ist.

4. Einrichtung nach Anspruch 1, **dadurch gekennzeichnet**, daß das Antriebsmittel ein Motor für eine Wisch-Wasch-Anlage ist.

5. Einrichtung nach Anspruch 1, **dadurch gekennzeichnet**, daß das Antriebsmittel eine Vorrichtung zum Bewegen wenigstens eines Teils eines Daches eines Kraftfahrzeugs ist.

6. Einrichtung nach Anspruch 1, **dadurch gekennzeichnet**, daß der Betrag der Änderung des Parameters mittels mehrerer Schwellwertschalter (120 bis 131) gewonnen wird.

7. Einrichtung nach Anspruch 2, **dadurch gekennzeichnet**, daß die Richtung der Änderung des Parameters durch einmaliges Differenzieren gewonnen wird.

8. Einrichtung nach Anspruch 2, **dadurch gekennzeichnet**, daß die Richtung der Änderung des Parameters mittels Kondensatoren (157 bis 167) festgestellt wird, die Schwellwertschaltern (120 bis 130) nachgeschaltet sind.

9. Einrichtung nach Anspruch 1, **dadurch gekennzeichnet**, daß die Einrichtung (225, 221; 252, 260; 320, 343) mehrere Anzapfungen (z. B. 230, 231) aufweist, an denen Signale abgreifbar sind, die einzeln oder in Kombination miteinander jeweils verschiedene Verschmutzungs- oder Benetzungsgrade, z. B. einer Windschutzscheibe, anzeigen und die mit jeweils verschiedenen Antriebsmitteln verbunden sind.

10. Einrichtung nach Anspruch 1, **dadurch gekennzeichnet**, daß das Antriebsmittel ein Scheibenwischermotor (70) und die Einrichtung eine Steuerung (83, 35, 120) ist, wobei diese Steuerung ein Steuersignal für den Scheibenwischermotor (70) abgibt, und daß eine Signal-Speichervorrichtung (84, 49, 221) vorgesehen ist, die das von der Steuerung (83, 35, 120) für den Scheibenwischermotor (70) abgegebene Signal für eine vorgebbare Zeit speichert und den Scheibenwischermotor (70) nur auslöst, wenn der Scheibenwischer (5, 6) seine End- und Ausgangslage eingenommen hat.

11. Einrichtung nach Anspruch 10, **dadurch gekennzeichnet**, daß die Speicherzeit der Signal-Speichervorrichtung (84, 49, 221) derjenigen Zeit entspricht, die der Scheibenwischer (5, 6) benötigt, um vom Verlassen des Sensors (3) zu seiner Ausgangsstellung zu gelangen, wobei die Drehung des Scheibenwischers in Richtung auf die Ausgangsstellung erfolgt.

12. Einrichtung nach Anspruch 1, **dadurch gekennzeichnet**, daß ein Ansteuersignal für ein Antriebsmittel nur dann abgegeben wird, wenn zusätzlich die Bedingung erfüllt ist, daß der Parameter des vom Sensor (3) kommenden Signals einen vorgegebenen Schwellwert ($R_0$) überschreitet.

13. Einrichtung nach Anspruch 1, **dadurch gekennzeichnet**, daß der Parameter die Signalamplitude ist, die zum ohmschen Widerstand des Sensors (3) korrespondiert.

14. Einrichtung nach Anspruch 1, **dadurch gekennzeichnet**, daß der Sensor (3) aus zwei sich nicht berührenden Leiterbahnanordnungen (7, 8) besteht, die kammartig ineinandergreifende Leiterstege (9, 10, 11; 12, 13, 14) aufweisen.

15. Einrichtung nach Anspruch 1, **dadurch gekennzeichnet**, daß der Sensor (3) drei sich nicht berührende Leiterbahnanordnungen (7, 8, 16) aufweist.

16. Einrichtung nach Anspruch 1, **dadurch gekennzeichnet**, daß der Sensor (3) derart in die Windschutzscheibe (2) eines Kraftfahrzeugs (1) eingelassen ist, daß seine Leiterbahnnanordnungen (7, 8) exakt mit der äußeren Oberfläche der Windschutzscheibe (2) fluchten.

17. Einrichtung nach Anspruch 1, **dadurch gekennzeichnet**, daß der Sensor (3) im oberen Drittel einer Windschutzscheibe (2) vorgesehen ist.

18. Einrichtung nach Anspruch 17, **dadurch gekennzeichnet**, daß der Sensor (3) derart an der Windschutzscheibe (2) vorgesehen ist, daß er aus der Blickrichtung eines Kraftfahrers und/oder Beifahrers durch einen Rückspiegel (4) verdeckt wird.

19. Einrichtung nach Anspruch 10, **dadurch gekennzeichnet**, daß der Sensor (3) Leiterbahnen (7, 8) aufweist, die eine Fläche von sieben bis achtzig $cm^2$ einnehmen.

20. Einrichtung nach Anspruch 10, **dadurch gekennzeichnet**, daß als Signal-Speichereinrichtung eine monostabile Kippstufe (91, 93) vorgesehen ist, deren Speicherzeit in Abhängigkeit von der Stellung des Scheibenwischers (5, 6) einstellbar ist.

21. Einrichtung nach Anspruch 10, **dadurch gekennzeichnet**, daß als Signalspeichereinrichtung ein Flipflop (99) vorgesehen ist, das bei Auftreten eines Einschaltimpulses für den Scheibenwischer-Motor (70) gesetzt und bei Erreichen der Ausgangslage des Scheibenwischers (5, 6) wieder gelöst wird.

22. Einrichtung nach Anspruch 8, **dadurch gekennzeichnet**, daß von den Kondensatoren (157 bis 167) Nadelimpulse an eine Signal-Speichereinrichtung (221) gegeben werden und den Start einer Signalverzögerungszeit bewirken.

23. Einrichtung nach Anspruch 1, **dadurch gekennzeichnet**, daß der Antriebsmotor (70) geschwindigkeitsregelbar ist und in Abhängigkeit vom Benetzungs- oder Verschmutzungsgrad gesteuert wird.

## Claims

1. An arrangement for the control of a drive means (70) for a vehicle accessory having
   - sensor (3) which responds to the moisture on the outside of the vehicle (1), particularly on the windscreen (2), and which generates a signal having a parameter dependent upon the degree of wetness, and
   - an arrangement (83) which triggers the drive means (70) in dependence upon the magnitude of the parameter of the signal coming from the sensor (3),

   characterised by an arrangement (120 to 131, 132 to 143) for the detection of the amount of the change in the parameter within a predetermined time, and a further arrangement (225, 221; 252, 260; 320, 343) which triggers the drive means (70) when a specific amount of this change in the parameter exists.

2. An arrangement as claimed in claim 1, characterised by an arrangement (157 to 167) for the detection of the positive or negative direction of the change in the parameter.

3. An arrangement as claimed in claim 1, characterised in the drive means is a windscreen wiper motor.

4. An arrangement as claimed in claim 1, characterised in that the drive means is a motor for a wiping and washing system.

5. An arrangement as claimed in claim 1, characterise in that the drive means is a device for moving at least a part of a roof of a motor vehicle.

6. An arrangement as claimed in claim 1, characterised in that the amount of the change in the parameter is obtained by means of a plurality of threshold value switches (120 to 131).

7. An arrangement as claimed in claim 2, characterised in that the direction of the change in the parameter is obtained by single differentiation.

8. An arrangement as claimed in claim 2, characterised in that direction of the change in the parameter is established by means of capacitors (157 to 167) connected to the outputs of the threshold value switches (120 to 130).

9. An arrangement as claimed in claim 1, characterised in that the arrangement (225, 221; 252, 260; 320, 343) has a plurality of tappings (230, 231, for example) from which may be tapped signals which, individually or in combination with one another, each indicate different degrees of soiling or wetting of, for example, a windscreen and are connected to various respective drive means.

10. An arrangement as claimed in claim 1, characterised in that the drive means is a windscreen wiper motor (70) and the arrangement is a control (83, 35, 120), wherein this control generates a control signal for the windscreen wiper motor (70), and that a signal storage device (84, 49, 221) is provided and stores the signal, generated by the control (83, 35, 120) for the windscreen wiper motor (70), for a predeterminable time and triggers the windscreen wiper motor (70) only when the windscreen wiper (5, 6) has assumed its end position and starting position.

11. An arrangement as claimed in claim 10, characterised in that the storage time of the signal storage device (84, 49, 221) corresponds to the time which the windscreen wiper (5, 6) requires to reach its starting position from leaving the sensor (3), wherein the windscreen wiper rotates towards its starting position.

12. An arrangement as claimed in claim 1, characterised in that a control signal for the drive means is generated only upon additional fulfilment of the condition that the parameter of the signal coming from the sensor (3) exceeds a predetermined threshold value ($R_0$).

13. An arrangement as claimed in claim 1, characterised in that the parameter is the signal amplitude which corresponds to the ohmic resistance of the sensor (3).

14. An arrangement as claimed in claim 1, characterised in that the sensor (3) comprises two conductor path arrangements (7, 8) which are not in contact with one another and which have conductor strips (9, 10, 11; 12, 13, 14) which interengage in a comb-like manner.

15. An arrangement as claimed in claim 1, characterised in that the sensor (3) has three conductor path arrangements (7, 8, 16) which are not in contact with one another.

16. An arrangement as claimed in claim 1, characterised in that the sensor (3) is let into the windscreen (2) of a motor vehicle (1) in such a way that its conductor paths (7, 8) are exactly flush with the outer surface of the windscreen (2).

17. An arrangement as claimed in claim 1, characterised in that the sensor (3) is provided in the top third of a windscreen (2).

18. An arrangement as claimed in claim 17, characterised in that the sensor (3) is provided on the windscreen (2) in such a way that it is concealed from the direction of sight of a vehicle driver and/or a front-seat passenger by a rearview mirror (4).

19. An arrangement as claimed in claim 10, characterised in that the sensor(3) has conductor paths (7, 8) which occupy an area of from seven to eighty cm$^2$.

20. An arrangement as claimed in claim 10, characterised in that the signal storage device is a monostable trigger stage (91, 93) whose storage time is adjustable in dependence upon the position of the windscreen wiper (5, 6).

21. An arrangement as claimed in claim 10, characterised in that the signal storage device is a flipflop (99) which is set upon the occurrence of a switching-on pulse for the windscreen wiper motor (70) and is released again when the windscreen wiper (5, 6) reaches its starting position.

22. An arrangement as claimed in claim 8, characterised in that needle pulses are transmitted from the capacitors (157 to 167) to a signal storage device (221) and effect the start of a signal delay time.

23. An arrangement as claimed in claim 1, characterised in that the drive motor (70) is regulable with respect to speed and is controlled on dependence upon the degree of wetting or soiling.

**Revendications**

1. Dispositif de commande d'un organe d'entraînement (70) d'un accessoire de véhicule automobile, comportant
   - un capteur (3) réagissant à l'humidité présente à l'extérieur du véhicule (1), en particulier sur le pare-brise (2), produisant un signal avec un paramètre dépendant du degré d'humidité et
   - un dispositif (83) actionnant l'organe d'entraînement (70) en fonction de la valeur du paramètre du signal émis par le capteur (3),
   caractérisé par un dispositif (120 à 131, 132 à 143) d'évaluation de l'importance de la variation du paramètre au cours d'un temps prédéterminé et par un autre dispositif (225, 221 ; 252, 260 ; 320, 343) actionnant l'organe d'entraînement (70) lorsque cette variation du paramètre représente une certaine valeur.

2. Dispositif selon la revendication 1, caractérisé par un dispositif (157 à 167) de détection du sens positif ou négatif de la variation du paramètre.

3. Dispositif selon la revendication 1, caractérisé en ce que l'organe d'entraînement est un moteur d'essuie-glace.

4. Dispositif selon la revendication 1, caractérisé en ce que l'organe d'actionnement est un moteur destiné à un système de lavage-essuyage.

5. Dispositif selon la revendication 1, caractérisé en ce que l'organe d'actionnement est un système de mise en mouvement d'au moins une partie d'un toit d'un véhicule automobile.

6. Dispositif selon la revendication 1, caractérisé en ce que l'importance de la variation du paramètre est captée au moyen de plusieurs commutateurs à valeur de seuil (120 à 131).

7. Dispositif selon la revendication 2, caractérisé en ce que le sens de la variation du paramètre est calculé par différentiation unique.

8. Dispositif selon la revendication 2, caractérisé en ce que le sens de la variation du paramètre est déterminé au moyen de condensateurs (157 à 167), qui sont montés en aval de commutateurs à valeur de seuil (120 à 130).

9. Dispositif selon la revendication 1, caractérisé en ce que le dispositif (225, 221 ; 252, 260 ; 320, 343) présente plusieurs points de prise (230, 231), au niveau desquels des signaux peuvent être prélevés, qui indiquent, de façon isolée ou en combinaison, différents degrés d'encrassement ou d'humidité, d'un pare-brise par exemple, et qui sont reliés respectivement à différents organes d'entraînement.

10. Dispositif selon la revendication 1, caractérisé en ce que l'organe d'entraînement est un moteur d'essuie-glace (70) et le dispositif est une commande (83, 35, 120), cette commande délivrant un signal de commande destiné au moteur d'essuie-glace (70), et en ce qu'un dispositif de mémorisation de signal (84, 49, 221) est prévu pour mémoriser, pendant une période pouvant être prédéterminée, le signal destiné au moteur d'essuie-glace (70) délivré par la commande (83, 35, 120), et qui ne met en route le moteur d'essuie-glace (70) que lorsque l'essuie-glace (5, 6) se trouve dans sa position d'arrivée et de départ.

11. Dispositif selon la revendication 10, caractérisé en ce que le temps de mémorisation du dispositif de mémorisation de signal (84, 49, 221) correspond au temps qui est nécessaire à l'essuie-glace (5, 6) pour arriver à sa position de départ à partir du moment où il quitte le capteur (3), la rotation de l'essuie-glace étant réalisée en direction de la position de départ.

12. Dispositif selon la revendication 1, caractérisé en ce qu'un signal d'actionnement destiné à un organe d'actionnement n'est délivré que lorsqu'est remplie la condition supplémentaire que le paramètre du signal provenant du capteur (3) dépasse une valeur de seuil ($R_0$) prédéterminée.

13. Dispositif selon la revendication 1, caractérisé en ce que le paramètre est l'amplitude de signal qui correspond à la résistance ohmique du capteur (3).

14. Dispositif selon la revendication 1, caractérisé en ce que le capteur (3) est constitué de deux ensembles de pistes conductrices (7, 8) qui ne sont pas en contact, présentant des nervures conductrices (9, 10, 11 ; 12, 13, 14) agencées les unes par rapport aux autres à la façon d'un peigne.

15. Dispositif selon la revendication 1, caractérisé en ce que le capteur (3) possède trois ensembles de pistes conductrices (7, 8, 16) qui ne sont pas en contact.

16. Dispositif selon la revendication 1, caractérisé en ce que le capteur (3) est monté dans le pare-brise (2) d'un véhicule automobile (1) de telle sorte que ses ensembles de pistes conductrices (7, 8) soient exactement alignés avec la surface extérieure du pare-brise (2).

17. Dispositif selon la revendication 1, caractérisé en ce que le capteur (3) est prévu dans le tiers supérieur d'un pare-brise (2).

18. Dispositif selon la revendication 17, caractérisé en ce qu'il est prévu de monter le capteur (3) dans le pare-brise (2) de telle sorte qu'il soit dissimulé par un rétroviseur (4) et ne se trouve pas dans le champ de vision d'un conducteur et/ou d'un passager.

19. Dispositif selon la revendication 10, caractérisé en ce que le capteur (3) présente des pistes conductrices (7, 8) occupant une surface de sept à quatre-vingt cm$^2$.

20. Dispositif selon la revendication 10, caractérisé en ce qu'est prévu, comme dispositif de mémorisation de signal, un culbuteur monostable (91, 93), dont le temps de mémorisation est réglable en fonction de la position de l'essuie-glace (5, 6).

21. Dispositif selon la revendication 10, caractérisé en ce qu'un flip-flop (99) est prévu, comme dispositif de mémorisation de signal, et est déclenché lorsqu'une impulsion de commutation destinée au moteur d'essuie-glace (70) est émise, et est à nouveau déconnecté lorsque l'essuie-glace (5, 6) atteint la position de départ.

22. Dispositif selon la revendication 8, caractérisé en ce que des impulsions en pointe sont envoyées par les condensateurs (157 à 167) à un dispositif de mémorisation de signal (221) et entraînent le déclenchement d'une période de retardement de signal.

23. Dispositif selon la revendication 1, caractérisé en ce que la vitesse du moteur d'entraînement (70) est susceptible d'être réglée et est commandée en fonction du degré d'humidité ou d'encrassement.

FIG. 1

FIG. 2

FIG. 3

FIG.4

FIG.5

FIG.6

FIG.7

EP 0 407 538 B1

FIG.8

FIG.9

FIG.10

22

FIG. 11

FIG.12

FIG.13

FIG.14

EP 0 407 538 B1